(19) Europäisches Patentamt
European Patent Office
Office européen des brevets

(11) **EP 3 952 364 A1**

(12) **EUROPEAN PATENT APPLICATION**

(43) Date of publication:
**09.02.2022 Bulletin 2022/06**

(21) Application number: **20189893.9**

(22) Date of filing: **06.08.2020**

(51) International Patent Classification (IPC):
**H04W 8/06** *(2009.01)*    **H04W 8/08** *(2009.01)*
**H04W 60/04** *(2009.01)*

(52) Cooperative Patent Classification (CPC):
**H04W 8/08; H04W 8/06; H04W 60/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90503 (US)**

(72) Inventors:
• **TAO, Ming-Hung
  63225 Langen (DE)**

• **SUZUKI, Hidetoshi
  Osaka, 540-6207 (JP)**
• **KUANG, Quan
  63225 Langen (DE)**
• **SHAH, Rikin
  63225 Langen (DE)**
• **NISHIO, Akihiko
  Osaka, 540-6207 (JP)**

(74) Representative: **Grünecker Patent- und
Rechtsanwälte
PartG mbB
Leopoldstraße 4
80802 München (DE)**

(54) **TRANSCEIVER DEVICE, NETWORK ENTITY AND BASE STATION**

(57)     The present disclosure provides a transceiver device, comprising circuitry which, in operation, determines a current geographic cell using a current geographic position of the transceiver device and a mapping relation between geographic locations and geographic cells; and a transceiver which, in operation, transmits, in a registration request message, a current identifier indicating the current geographic cell, and receives, in a registration accept message, a plurality of first identifiers indicating a plurality of first geographic cells.

Fig. 15

EP 3 952 364 A1

**Description**

**FIELD OF THE PRESENT DISCLOSURE**

The present disclosure relates to transmission and reception of signals in a communication system, such as a 3GPP communication system. In particular, the present disclosure relates to methods and apparatuses for such transmission and reception.

**TECHNICAL BACKGROUND**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

**SUMMARY**

One non-limiting and exemplary embodiment facilitates providing improved procedures for facilitating to reduce signaling overhead in a wireless communication network.

In an embodiment, the techniques disclosed herein feature a transceiver device, comprising circuitry which, in operation, determines a current geographic cell using a current geographic position of the transceiver device and a mapping relation between geographic locations and geographic cells; and a transceiver which, in operation, transmits, in a registration request message, a current identifier indicating the current geographic cell, and receives, in a registration accept message, a plurality of first identifiers indicating a plurality of first geographic cells.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF DRAWINGS**

In the following, exemplary embodiments are described in more detail with reference to the attached figures and drawings.

**Fig. 1**      shows an exemplary architecture for a 3GPP NR system;

**Fig. 2**      shows an exemplary user and control plane architecture for the LTE eNB, gNB, and UE;

**Fig. 3**      is a schematic drawing which shows functional split between NG-RAN and 5GC;

**Fig. 4**      is a sequence diagram for RRC connection setup/reconfiguration procedures;

**Fig. 5**      is a schematic drawing showing usage scenarios of enhanced Mobile Broadband (eMBB), Massive Machine Type Communications (mMTC) and Ultra Reliable and Low Latency Communications (URLLC);

**Fig. 6**      is a block diagram which shows an exemplary 5G system architecture for a non-roaming scenario;

**Fig. 7A** illustrates a situation of moving cells and stationary tracking areas at a first time;

**Fig. 7B** illustrates the situation of moving cells and stationary tracking areas at a second time later than the first time;

**Fig. 8A** illustrates a possible realization of geographic cells as a rectangular pattern in the vicinity of a border between two countries;

**Fig. 8B** illustrates a possible realization of geographic cells as a hexagonal pattern in the vicinity of a border between two countries;

**Fig. 8C** illustrates a possible realization of geographic cells wherein geographical cells in the vicinity of a border between countries are subdivided into a plurality of smaller geographic cells;

**Fig. 9** is a block diagram showing the functional components of a network entity, a base station and a transceiver device according to an embodiment;

**Fig. 10** illustrates the steps of a method performed by a transceiver device according to an embodiment;

**Fig. 11** illustrates the steps of a method performed by a network entity according to an embodiment;

**Fig. 12** illustrates a tracking area of a transceiver device comprising a plurality of geographic cells;

**Fig. 13** illustrates coverage areas of satellite-borne base stations overlapping geographic cells making up a tracking area assigned to a transceiver device;

**Fig. 14** illustrates the steps of a method performed by a base station according to an embodiment;

**Fig. 15** illustrates the steps of a method performed by a transceiver device according to an embodiment;

**Fig. 16** illustrates the steps of a method performed by a network entity according to an embodiment; and

**Fig. 17** illustrates the steps of a method performed by a base station according to an embodiment.

**DETAILED DESCRIPTION**

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

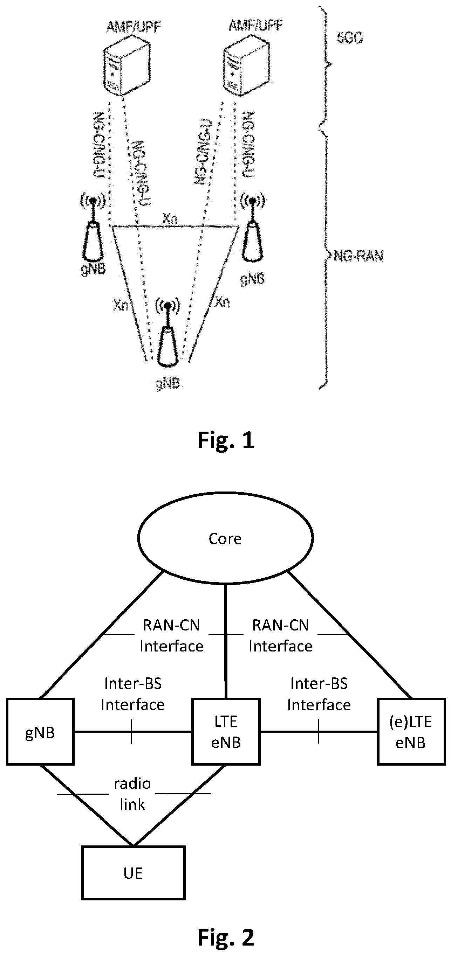

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

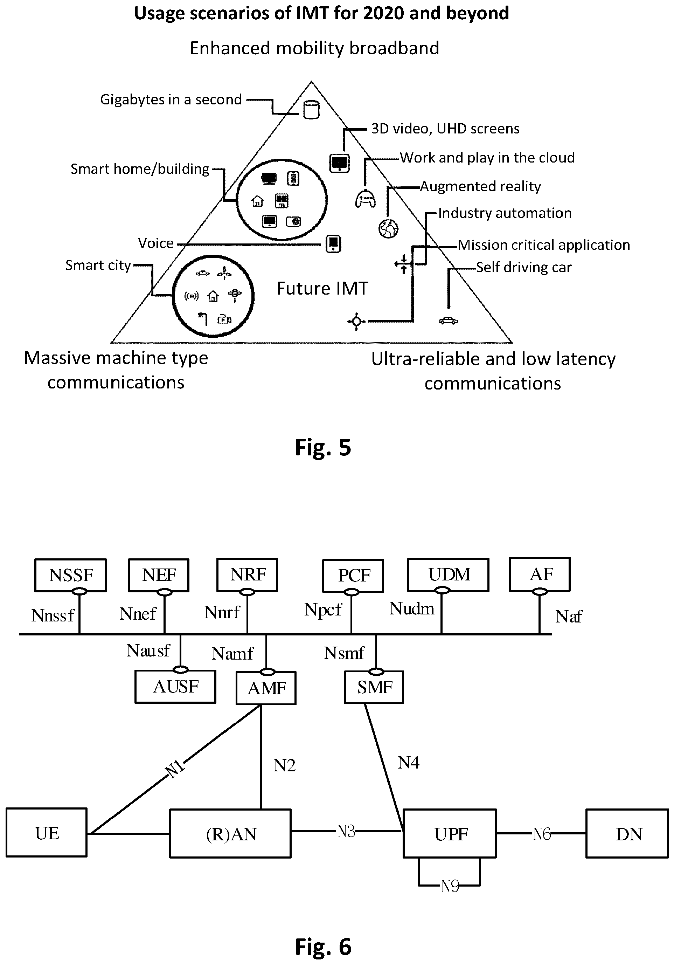

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. Fig. 2 illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. One physical channel is the PRACH (Physical Random Access Channel) used for the random access.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10-5 within 1ms). Finally, mMTC may preferably require high connection density (1,000,000 devices/km2 in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

*5G NR functional split between NG-RAN and 5GC*

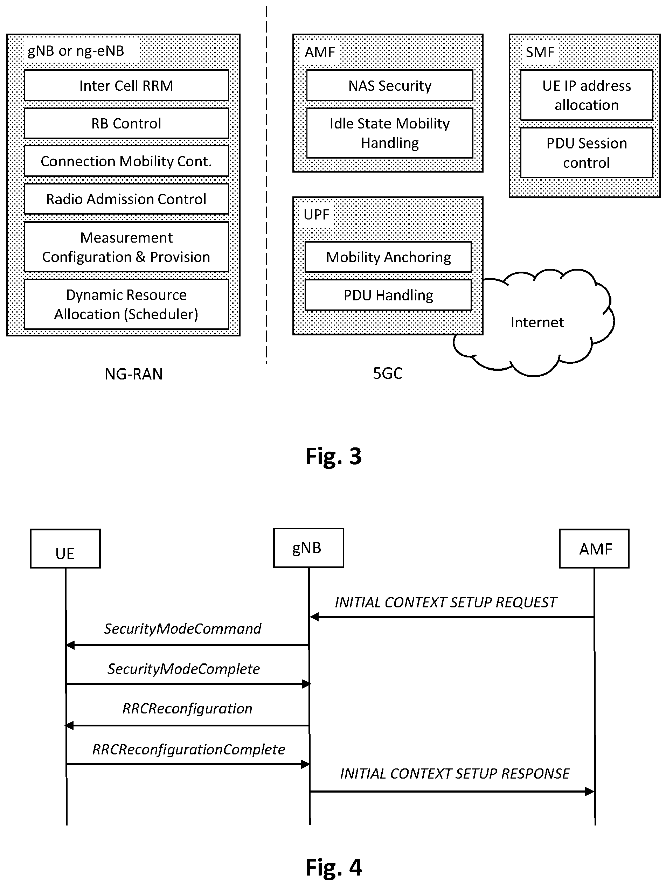

Fig. 3 illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;

- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

Fig. 4 illustrates some interactions between a UE, gNB, and AMF (a 5GC entity) in the context of a transition of the UE from RRC_IDLE to RRC_CONNECTED for the NAS part (see TS 38.300 v15.6.0).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.
In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*Usage Scenarios of IMT for 2020 and beyond*

Fig. 5 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 5 illustrates some examples of envisioned usage scenarios for IMT for 2020 and beyond.

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From RAN1 perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLCC in Rel. 15 include Augmented Reality/Virtual Reality (AR/VR), e-health, e-safety, and mission-critical applications.

Moreover, technology enhancements targeted by NR URLCC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLCC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization down to the order of a few μs where the value can be one or a few μs depending on frequency range and short latency in the order of 0.5 to 1 ms in particular a target user plane latency of 0.5 ms, depending on the use cases.

Moreover, for NR URLCC, several technology enhancements from RAN1 perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 4. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 6 illustrates a 5G NR non-roaming reference architecture (see TS 23.501 v16.1.0, section 4.23). An Application Function (AF), e.g. an external application server hosting 5G services exemplary described in Fig. 5, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 6 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services.

*Downlink control channel monitoring, PDCCH, DCI*

Many of the functions operated by the UE involve the monitoring of a downlink control channel (e.g. the PDCCH, see 3GP TS 38.300 v15.6.0, section 5.2.3) to receive e.g. particular control information or data destined to the UE.

A non-exhaustive list of these functions is given in the following:

- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power. Correspondingly, a timer may be started when the UE starts the PDCCH monitoring for the intended purpose. Then, when the timer expires, the UE may stop the PDCCH monitoring for the intended purpose, and has the opportunity to save power.

*Paging Procedures in 5G NR*

An exemplary implementation of the paging function in 5G NR that involves PDCCH monitoring, according to the currently standardized version, will be explained in a simplified and abbreviated form in the following.

There are two different paging procedures in 5G NR, a RAN-based paging procedure (e.g. based on RAN-based notification areas) and a core-network-based paging procedure (see for instance 3GPP TS 38.300 v15.6.0, TS 38.304 v15.4.0, and TS 38.331 v15.6.0 referring to RAN paging and CN paging in several sections thereof, such as section 9.2.5 "Paging" in TS 38.300).

Paging allows the network to reach UEs in RRC_IDLE and RRC_INACTIVE state through Paging messages, and to notify UEs in RRC_IDLE, RRC_INACTIVE, and RRC_CONNECTED state of system information change and public warning information (such as ETWS/CMAS, Earthquake and Tsunami Warning System/ Commercial Mobile Alert System) indications through Short Messages. Both the paging messages and the Short Messages are addressed with P-RNTI on the PDCCH to be monitored by the UE. But while the actual paging messages (e.g. with the paging records) are then sent on PCCH (as indicated by the PDCCH), the Short Messages can be sent over PDCCH directly.

While in RRC_IDLE the UE monitors the paging channels for CN-initiated paging, in RRC_INACTIVE the UE also monitors paging channels for RAN-initiated paging. A UE need not monitor paging channels continuously though; Paging DRX is defined where the UE in RRC_IDLE or RRC_INACTIVE is only required to monitor paging channels during one Paging Occasion (PO) per DRX cycle (see 3GPP TS 38.304 v15.3.0, e.g. sections 6.1 and 7.1). The Paging DRX cycles are configured by the network.

The POs of a UE for CN-initiated and RAN-initiated paging are based on the same UE ID, resulting in overlapping POs for both. The number of different POs in a DRX cycle is configurable via system information, and a network may distribute UEs to those POs based on their IDs. A PO is a set of PDCCH monitoring occasions and can consist of multiple time slots (e.g. subframe or OFDM symbol) where paging DCI can be sent. One Paging Frame (PF) is one Radio Frame and may contain one or multiple PO(s) or starting point of a PO.

When in RRC_CONNECTED, the UE monitors the paging channels in any PO for a System Information (SI) change indication and/or a PWS (Public Warning System) notification. In case of Bandwidth Adaptation (BA) (see section 6.10 in TS 38.300), a UE in RRC_CONNECTED only monitors paging channels on the active BWP with common search space configured.

When the UE receives a paging message, the PDCCH monitoring can be stopped by the UE. Depending on the paging cause, the UE may continue with e.g. obtaining system information, or establishing the RRC connection with the base station and then receiving the traffic/instruction from the network.

*Connection Management: CM_IDLE and CM_CONNECTED*

A transceiver device like a UE in a NR radio network may communicate with an NR core network entity like an AMF realizing entity. For instance, when the transceiver device is switched on for the first time or when it was in an idle state for a long time, a connection to the AMF needs to be established. This may be referred to as Connection Management, used to establish and release a control plane signaling connection between a UE and AMF.

That is, Connection Management (CM) reflects the UE status in terms of its signaling connection with the AMF. In CM_IDLE, the UE does not have a signaling connection with the AMF. A UE in CM_CONNECTED has a signaling connection with the AMF.

The connection between AMF and UE may be utilized for transmission of Non-Access Stratum (NAS) signaling messages. NAS is a functional layer in the network between the core network and UE and is used to manage establishment of communication sessions and for maintaining continuous communication with UE as it moves.

The signaling connection between UE and AMF can be viewed as a combination of the signaling connection between UE and a base station and the signaling connection between the base station and AMF.

A UE moves itself to CM_CONNECTED when an RRC signaling connection has been established. AMF moves the UE into CM_CONNECTED once the signaling connection has been established. Within both UE and AMF the CM_IDLE and the CM_CONNECTED states are maintained.

A UE which is RRD_IDLE is also CM_IDLE. A UE which is RRC_CONNECTED or RRC_INACTIVE is CM_CONNECTED.

In a case where a UE is to be paged, an RRC paging message is broadcast by the network, which triggers the UE to establish an RRC connection and to send a Service Request to the AMF. The Service Request initiates the setup of the signaling connection, which moves UE into CM_CONNECTED.

When the signaling connection is released or when the signaling connection fails, UE transitions to CM_IDLE.

More details about Connection Management, CM_CONNECTED and CM_IDLE can be found, for instance, in 3GPP TS 23.501 v15.10.0: "System architecture for the 5G System (5GS)", 3GPP TS 23.502 v15.10.0: "Procedures for the 5G System (5GS)", or 3GPP TS 24.501 v15.6.0: "Non-Access Stratum (NAS) protocol for 5G Systems (5GS)".

*Tracking area and tracking area code*

Since the location of a UE is typically known on a cell level, a paging message is typically transmitted across multiple cells in the so-called tracking area (TA), which may be controlled by the AMF/MME (Mobility Management Entity).

A group of neighboring gNBs may be defined as a TA. This definition may be performed, for instance, at an initial deployment of a network, wherein each gNB may be configured with its own TA. A tracking area code (TAC) is a unique code that is assigned to each of the TAs.

In other words, a TAC is the unique code that each operator assigns to each of their TAs. A tracking area identifier (TAI) consists of a PLMN ID and a TAC. A PLMN ID may be a combination of a Mobile Country Code (MCC) and a Mobile Network Code (MNC), which is the unique code assigned to each operator in the world. This format of assigning makes a TAI uniquely identifiable globally.

As the network has to have updated location information about UEs in RRC_IDLE to find out in which TA a particular UE is located, the UE may notify the network of its current location by sending a tracking area update (TAU) message every time it moves between TAs.

For this purpose, when a UE attaches to a network, a list indicating TAs where the network believes the UE is located is obtained. When moving within the TAs indicated by said list, a TAU procedure is not required to be performed. However, when the UE moves to within a TA not indicated by said list, a TAU procedure is initiated.

Further, a UE in RRC_IDLE may send TAU messages on a regular basis in a periodic manner, even when the UE stays within the same TA. By providing TAU messages regularly, the network may be informed that the UE is still available and may receive data.

The tracking area code associated with a cell may be broadcasted by a respective gNB in system information, as described further below.

*NR System Information Acquisition*

An exemplary implementation of the system information acquisition function in 5G NR that involves PDCCH monitoring, already mentioned briefly above, according to the currently standardized version, will be explained in a simplified and abbreviated form in the following.

In 5G NR, system information (SI) is divided into the MIB (Master Information Block) and a number of SIBs (System Information Blocks) (see 3GPP TS 38.331 v15.6.0 e.g. section 5.2, see also 3GPP TS 38.300 v15.6.0 e.g. section 7.3, and also 3GPP TS 38.213 v15.6.0 e.g. section 13). The MIB is transmitted on the BCH and includes parameters that are needed to acquire the SIB1 from the cell. The SIB1 is periodically transmitted on the DL-SCH and includes information regarding the availability and scheduling, e.g. mapping of SIBs to SI messages, periodicity, SI-window size of other SIBs with an indication whether one or more SIBs are only provided on demand, and in that case, the configuration needed by the UE to perform the SI request.

SIBs other than SIB1 are carried in System Information messages (SI messages), which are transmitted on the DL-SCH. SIBs having the same periodicity can be mapped to the same SI message. Each SI message is transmitted within periodically occurring time-domain windows (referred to as SI-windows with the same length for all SI messages). Each SI message is associated with an SI-window, and the SI-windows of different SI messages do not overlap.

The UE applies the SI acquisition procedure to acquire the information of the Access Stratum (AS) and Non-Access stratum (NAS), and applies to UEs in RRC_IDLE, in RRC_INACTIVE, and in RRC_CONNECTED modes. For instance, the UE may apply the SI acquisition procedure upon cell selection (e.g. upon power-on), cell-reselection, return from out of coverage, after reconfiguration with sync completion, after entering the network from another RAT (Radio Access Technology), upon receiving an indication that the system information has changed (SI change indication), and when the UE does not have a valid version of a stored SIB. A modification period is used, i.e. updated SI is broadcast in the modification period following the one where the SI change indication is transmitted. The modification period can be defined by multiplying the default paging cycle (e.g. 230/640/1280/2560ms) with a corresponding coefficient (modificationPeriodCoeff: 2/4/8/16), modification period = defaultPagingCycle x modificationPeriodCoeff.

*Beamforming*

Beamforming is a solution for increasing the performance of a mobile network, which may allow for higher spectral efficiency, improved link performance and extended coverage. Beamforming was included in the NR specification in the first 3GPP Release 15. According to a traditional approach, data is transmitted over the whole area of a cell, whereas when beamforming is applied, the data is sent with comparably narrow beams.

Beams can be formed in a number of different ways, and either a fixed grid of beams may be provided or user-specific (UE-specific) beamforming may be performed.

Beamforming may be considered to be the application of multiple radiating elements transmitting the same signal at an identical wavelength and phase, which in combination create a longer targeted stream. That is the targeted stream is formed by reinforcing the waves in a specific direction. The direction of a beam may be changed by changing the phase of the radiating elements with a common frequency, wherein different frequencies may be used to for a beams steering in different direction.

*Non-terrestrial networks*

In 3GPP, NR-based operation in a non-terrestrial network (NTN) is studied and described (see e.g. 3GPP TR 38.811, Study on New Radio (NR) to support non-terrestrial networks, version 15.0.0, and 3GPP TR 38.821, Solutions for NR to support non-terrestrial networks, version 0.3.0). Architectural aspects are studied in TR 23.737 (3GPP TR 23 737, Study on architecture aspects for using satellite access in 5G (Release 17), version 17.0.0).

The benefit is of the extension of NR communication services to remote areas, ships, airplanes, and the like. Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform.

Satellite or other high-altitude platforms may consist of only a relay function from the access side to the feeder link to a ground station, or it may include part or all of NR radio baseband processing (e.g. a part of a gNB or a full gNB). The remaining part of the network and core network may be located on the ground. Satellites may also have a link to another satellite (Inter-Satellite Link, ISL), which may be beneficial if the satellite cannot reach any ground station directly.

The NTN architecture may use existing NR logical interfaces, protocols and concepts with adaptions to cope with longer latencies and/or other NTN specifics, for example.

A transmission between a terminal (UE) may be performed via a remote radio unit including a satellite and an NTN gateway. A gNB may be located at the gateway as a scheduling device/base station. The satellite payload may implement frequency conversion and radiofrequency amplifier in both uplink and downlink direction. Hence, the satellite may repeat the NR radio interface from the feeder link (between the NTN gateway and the satellite) to the service link (between the satellite and the UE) and vice versa. A satellite in this configuration is referred to as a transparent satellite.

A transmission between a terminal (UE) may also be performed via a satellite including a gNB as a scheduling device/base station. A satellite in this configuration is referred to as a regenerative satellite.

The satellite may be in a low earth orbit (LEO), that is, at approximately 600 or 1200 km altitude, or in a geostationary orbit, that is, at approximately 35786 km altitude. In GEO orbit, the satellite's position does not alter substantially over time with respect to the Earth's surface, whereas in LEO orbit, the satellite moves with respect to the surface.

*Tracking areas within NTNs*

In an NTN with a base station located on a satellite in LEO, for instance, a tracking area associated with a cell served by said base station may move with respect to the Earth's surface. In other words, in a case where satellites/cells will not change the broadcasted TAC value, the TA will sweep over the ground as the cells move (moving tracking area). In consequence, a stationary UE would have to keep performing RAU in RRC_IDLE state, which would result in significant TAU overhead and unnecessary UE power consumption.

On the other hand, TA may be configured so as to be stationary with respect to the Earth's surface, regardless and independent from the position of cells moving with respect to the ground (fixed tracking area). That is, the TAs may be configured based on Earth's geographic location rather than based on the service area spanned by a set of base stations.

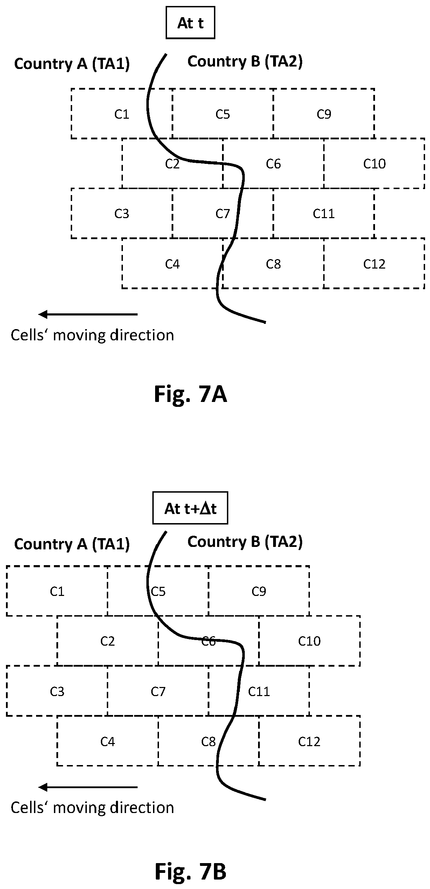

This is illustrated in Fig. 7A and Fig. 7B. Fig. 7A illustrates a situation at a certain time t, where a plurality of cells C1-C12 are located in the vicinity of a boundary between two tracking areas TA1 and TA2 (the boundary is indicated as a bold line). The boundary may, for instance, be set so as to correspond to the border line of two neighboring countries A and B. Fig. 7B illustrates the same geographical region as Fig. 7A, but at a different time t+Δt later than t. As can be seen from the illustration, the cells C1-C12 have moved from right to left by a certain distance, such that the relative position of the cells C1-C12 with respect to the boundary between TA1 and TA2 has changed. For example, C5, which was entirely within TA2 at time t is partially within TA1 and TA2 at time t+Δt. Further, for example, C7, which is partially within TA1 and TA2 at time t, is located within TA1 entirely at time t+Δt.

*Determination of a tracking area using UE's position*

In view of the above, it has been suggested in 3GPP TR 38.821 v.16.0.0: "Solutions for NR to support non-terrestrial networks (NTN)", section 7.3.1.3.2, for implementation of the concept of stationary tracking areas that a UE derives its tracking area using its current position.

For this purpose, a mapping relation between geographic locations upon the Earth's surface and tracking area codes may be kept on the UE and the network side. Further, the UE may determine its current position, for instance, by using a position provided by a global navigation satellite system like GPS, GLONASS, Beidou or Galileo. Using the mapping relation between TACs and geographic locations, UE may determine its current TAC. In this framework, a TAC is not broadcasted by the network. Further, UE is registered to a TA and receives paging messages from the network as long as the UE stays within the registered TA.

Further, the UE may determine its current location on a regular basis and compare the TAC derived using the position with the registered TA. In a case where the UE has left the TAC, a TAU procedure may be performed in order to be registered to a new TA by AMF.

In the above concept wherein a UE determines its current TAC using its current position, UE has to be aware of the current definition of stationary tracking areas with respect to geographic locations on the Earth's surface, i.e. the mapping relation between positions and TACs. However, signaling of the tracking are definition (e.g. the location, shape and/or size of the tracking area) may be complex and costly. Further, paging procedures on TA basis are inflexible, as an adjustment of the size of a region to be used for paging a UE may cause an extensive amount of signaling overhead.

Further, adjustments of the size, shape etc. of a tracking area (i.e. a redefinition of tracking areas) would have to be signaled to all UEs, which, again, causes signaling overhead.

Still further, as the radio cells may not be stationary, when paging a UE, AMF needs to determine which base stations the paging request message should be transmitted to and the base station needs to determine which radio cell or beam should be utilized when the paging request message is received from AMF.

In the following, UEs, base stations, and procedures to address the above issues will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The present disclosure provides apparatuses and techniques which may facilitate for reduced signaling overhead.

In the present disclosure, a tracking area may be considered as being composed of a plurality of geographic cells. Said geographic cells may be defined as being stationary regions upon the Earth's surface. The geographic cells may be non-overlapping. That is, each location on the Earth's surface is associated with one geographic cell at the most. In other words, the geographic cells are defined such that no location upon the Earth's surface is associated with two or more geographic cells.

The entirety of geographic cells may cover the entire surface of Earth or only a part of the Earth's surface. The geographic cells do not correspond to an actual coverage of base stations, but are defined independent from coverage areas or locations of said base stations.

In other words, geographic cells may be non-overlapping stationary regions defined upon the Earth's surface with respect to at least one geographic location on the Earth's surface.

The geographic cells may form a regular pattern and may also be referred to as location-based cells, geographically-based cells or virtual cells.

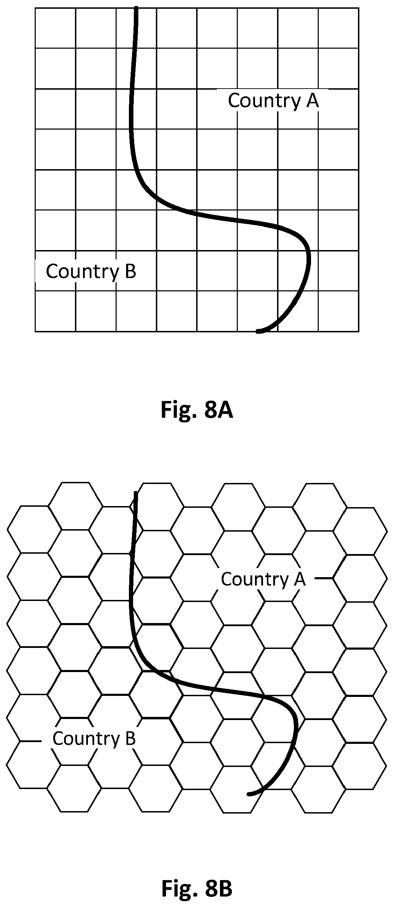

Fig. 8A illustrates a possible realization of geographic cells forming a rectangular regular pattern. As an example, the border between two counties A and B is indicated as a bold line. Each geographic cell exhibits a rectangular shape. The geographic areas are arranged so as not to overlap with each other, but to be located next to each other so as to cover an entire region to be served.

Fig. 8B illustrates a possible realization of geographic cells forming a hexagonal regular pattern. As an example, the border between the two counties A and B is indicated as a bold line. Each geographic cell exhibits a hexagonal shape. The geographic areas are arranged so as not to overlap with each other, but to be located next to each other so as to cover an entire region to be served.

Although Fig. 8A and Fig. 8B illustrate examples of geographic cells, whose sizes and shapes are equal to each other, the present disclosure is not limited thereto. For instance, the sizes and shapes of the geographic cells may be different.

For example, the geographic cells may be defined with respect to one reference location or a plurality of reference locations upon the Earth's surface. For instance, in a case of equally shaped or non-equally shaped geographic areas not forming a regular grid, a plurality of geographic cells may be defined by a corresponding plurality of reference locations. In this case, each reference location may define its geographic cell as the regions including locations which are not closer to another reference location defining another geographic cell.

For example, a regular pattern of geographic cells may be defined by an initial position, size and shape of a single geographic cell. The reference locations of the other geographic cells is then set relative to said single geographic cell. For instance, in the example illustrated in Fig. 8A, the position, size, shape and orientation of a single rectangular geographic cell determines the positions of the remaining geographic cells.

Further, each geographic cell may be associated with a dedicated identifier. The identifier may be unique. That is, each geographic cell may be uniquely identified by its identifier.

For instance, in a case of quadratic geographic cells, the identifiers may be defined in a similar way as in side link communication described in 3GPP TS 38.331 v.16.1.0: "Radio Resource Control (RRC) protocol specification", section 5.8.11. Specifically, for a given location (specified by its coordinates x any y), the following values could be defined:

$$x1 = Floor\ (x\ /\ L)\ mod\ 64$$

$$x2 = Floow\ (x\ /\ W)\ mod\ 64$$

wherein L and W denote a length and a width of a certain region to be divided into geographic cells.

The identifiers (IDs) of the geographic cells within said certain region may be defined as

$$ID\ (x,y) = y1\ *\ 64 + x1.$$

However, the present disclosure is not limited thereto, and the definition of geographic cells (i.e. a mapping relation between geographic locations of the Earth's surface and the geographic cells) may be realized differently, as long as no location on the Earth's surface is associated to more than one geographic cell.

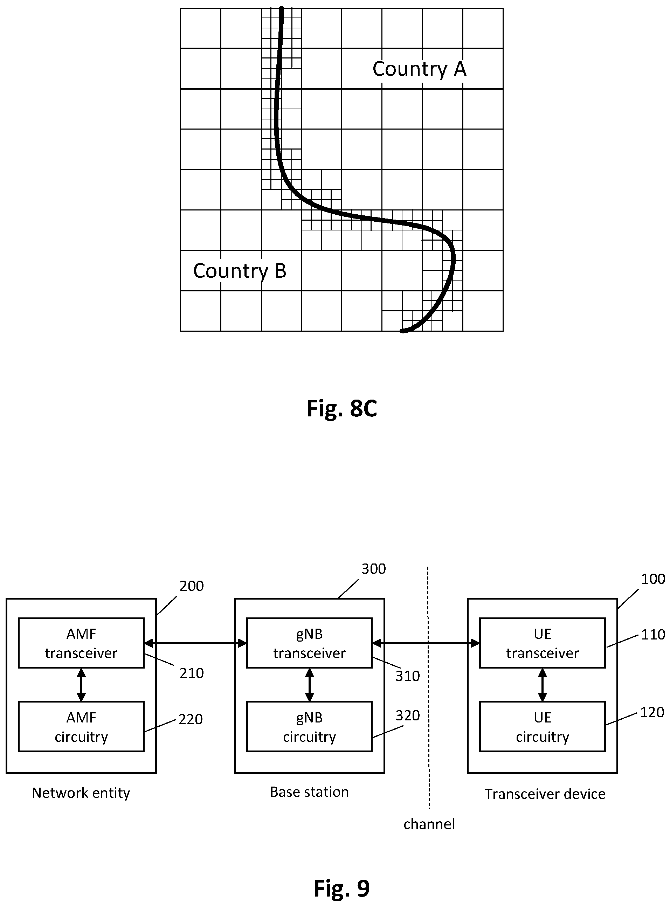

Further, in an embodiment, the pattern of geographic cells may be regular, as illustrated in Fig. 8A and Fig. 8B, for example, with certain geographic cells being further subdivided into smaller geographic cells. The geographic cells, which are further subdivided may be located in the vicinity of a border between countries, for example. This may allow for a spatially finer definition of geographic cells, for instance, within a threshold distance from a border between countries. The subdivided geographic cells may be again subdivided into even smaller geographic cells, as illustrated exemplarily in Fig. 8C. However, each geographic cell may be associated with a unique identifier.

The disclosure provides a network entity, a base station and a transceiver device, as exemplarily illustrated in Fig. 9.

The transceiver device 100 comprises a transceiver 110 and circuitry 120. The circuitry 120, in operation, determines a current geographic cell using a current geographic position of the transceiver device 100 and a mapping relation between geographic locations and geographic cells. The transceiver, in operation, transmits, in a registration request message, a current identifier indicating the current geographic cell, and receives, in a registration accept message, a plurality of first identifiers indicating a plurality of first geographic cells. The transceiver 110 is controlled by the circuitry 120.

For instance, the transceiver device 100 is a UE in a NR network. Accordingly, the transceiver 110 and circuitry 120 are also referred to as "UE transceiver" and "UE circuitry", respectively. However, these terms are merely used to distinguish the transceiver 110 and the circuitry 120 from circuitry and transceiver(s) comprised by other devices such as a base station 300 or a network entity 200. The transceiver device 100 may be a terminal service, relay device, or communication device of a similar communication system.

Further, the disclosure provides a network entity 200. The network entity 200 comprises a transceiver 210 and circuitry 220. The transceiver 210, in operation, receives, in a registration request message, a current identifier indicating a current geographic cell of a transceiver device 100. The circuitry 220, in operation, determines a plurality of first geographic cells using at least the current geographic cell of the transceiver device 100 and a mapping relation between geographic locations and geographic cells. Further, the transceiver, in operation transmits, in a registration accept message, a plurality of first identifiers indicating the plurality of first geographic cells. The transceiver 210 is controlled by the circuitry 220.

The transceiver 210 and the circuitry 220 are also referred to as network entity transceiver and network entity circuitry, respectively, to distinguish said units from the transceiver 110 and the circuitry 120 of the transceiver device or the transceiver 310 and the circuitry 320 of the base station 300.

For instance, the network entity 200 may be an access and mobility managing device in a core network device realizing the access and mobility managing function AMF. However, the present disclosure is not limited thereto, and the network entity may comprise multiple devices, including, for example, an access and mobility managing device in a core network device and the base station 300.

Further provided is the base station 300. The base station 300 comprises a transceiver 310 which, in operation, receives the registration request message including a current identifier indicating the current geographic cell of the transceiver device 100. Further, the transceiver 310 may transmit the registration request message to the network entity 200 and receive a registration accept message including a plurality of first identifiers indicating a plurality of first geographic cells. Further, the transceiver 310, in operation, transmits the registration accept message to the transceiver device 100. The transceiver 310 is controlled by the circuitry 320.

For instance, the base station 300 is a network node in a NR network system (a gNB) or in a similar communication system. The transceiver 310 and the circuitry 320 are also referred to as gNB transceiver and gNB circuitry, respectively, in order to distinguish said units from other transceivers and circuitries such as the UE transceiver 110 and UE circuitry 120.

Although in Fig. 9, the network entity and the base station are illustrated as separate devices, the present disclosure is not limited thereto, and the network entity 200 may be realized by the base station 300 itself. In other words, the base station 300 may be the network entity.

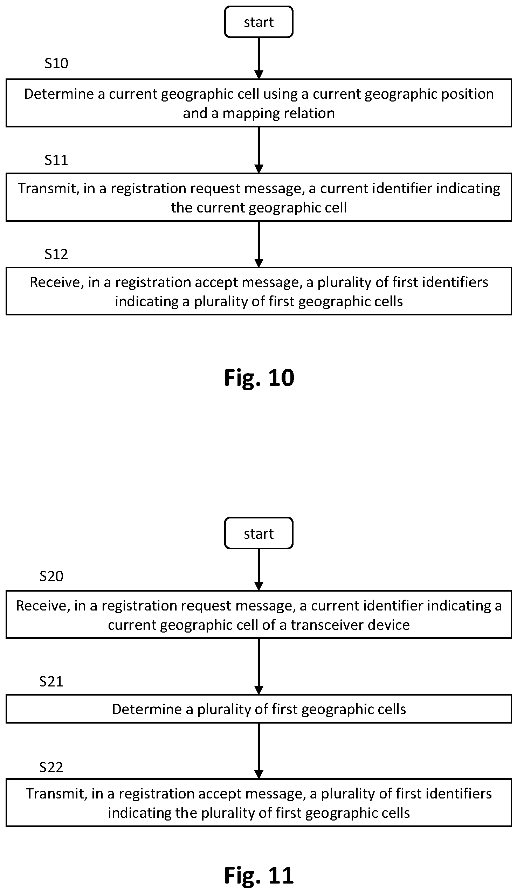

Fig. 10 illustrates the steps of a method performed by a transceiver device 100 according to an embodiment. In step S10, a current geographic cell is determined using a current geographic position and a mapping relation between geographic locations and geographic cells. In step S11, a current identifier indicating the current geographic cell is transmitted in a registration request message. Further, in step S12, a plurality of first identifiers is received, wherein the plurality of first identifiers indicate a plurality of first geographic cells.

Fig. 11 illustrates the steps of a method performed by a network entity 200 according to an embodiment. In step S20, a current identifier indicating a current geographic cell of a transceiver device 100 is received in a registration request message. In step S21, a plurality of first geographic cells is determined, using at least the current geographic cell of the transceiver device 100 and a mapping relation between geographic locations and geographic cells. In step S22, a plurality of first identifiers indicating the plurality of first geographic cells is transmitted in a registration accept message.

In an embodiment, the definition of the geographic cells may be pre-installed in the transceiver device 100. That is, the mapping relation between geographic locations and geographic cells may be installed within the transceiver device 100. For instance, in a case where the transceiver device is a user equipment like a mobile phone, the mapping relation may be installed to a memory device like a subscriber identity module (SIM) or other memory like flash memory. In this case, the UE circuitry 120 may access the SIM/memory in order to use the mapping relation between geographic location and geographic cell.

In an embodiment, the definition of the geographic cells, i.e. the mapping relation between geographic locations and geographic cells may be provided to the transceiver device 100 upon a first registration with the network entity 200 (the AMF, for instance). In such an embodiment, the transceiver device 100 may need to perform the registration procedure with the network entity 200 twice in order to complete the registration process.

The definition of the geographic cells may be signaled to the transceiver device 100 via RRC signaling (e.g., through SIB1 message), for instance.

The transceiver device 100 may determine, in a tracking area update procedure (triggered by an event or performed on a regular basis) its current position on the Earth's surface. For this purpose, the transceiver device 100 may use a global navigation satellite system, GNSS, unit like a GPS, GLONASS or Galileo unit. However, the present disclosure is not limited thereto, and the transceiver device may obtain its current position from a Wifi-positioning system, for instance.

Using the obtained position, the transceiver device 100 refers to the mapping relation between the geographic locations and geographic cells, compares its current position with the mapping relation and, thereby, determines the current geographic cell of the transceiver device 100. Further, an identifier of the current geographic cell is transmitted to the network entity 200 in a registration request message. This may be performed either directly, for instance in a case where the network entity 200 is realized by a base station 300 serving the transceiver device 100, or indirectly, wherein the registration request message is transmitted to the network entity 200 via a base station 300 serving the transceiver device 100.

In case that the transceiver device 100 cannot obtain its current position information or can only obtain its current position information with poor accuracy, or in case that the mapping relation between the geographic locations and geographic cells is not available, the transceiver device 100 shall attempt to acquire a TAC broadcasted by a base station 300, and determine the current geographic cell of the transceiver device 100 using the broadcasted TAC. The current position may be determined as having a poor accuracy in a case where an estimated uncertainty of the current position is larger than a threshold.

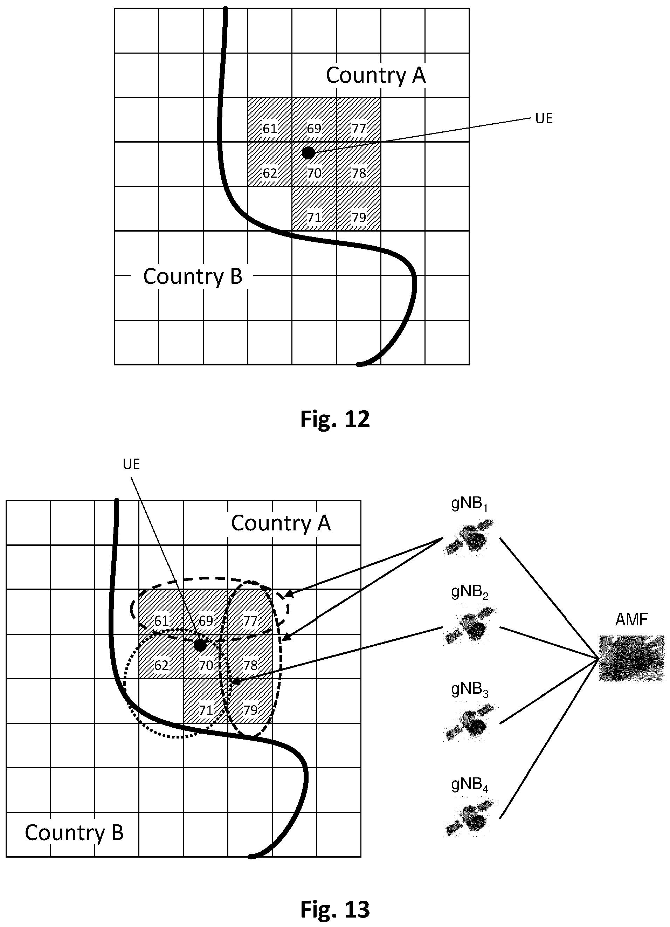

Fig. 12 illustrates a transceiver device 100 (UE) located within a geographic cell with identifier "70". That is, the transceiver device 100 determines that it is located within the geographic cell associated with the identifier $GC_{70}$ and, further, transmits the identifier "70" to the network entity 200.

The network entity 200 receives the registration request message including the identifier $GC_{70}$. Using the received identifier and a mapping relation between geographic locations and geographic cells, the network entity 200 determines a plurality of geographic cells. In the example illustrated in Fig. 12, the network entity 200 determines the geographic cells with identifiers $GC_{61}$, $GC_{62}$, $GC_{69}$, $GC_{70}$, $GC_{71}$, $GC_{77}$, $GC_{78}$ and $GC_{79}$ as the plurality of first identifiers.

For instance, the network entity 200 may determine geographic cells located within a threshold distance from the current geographic cell as the plurality of first geographic cells. In another example, the network entity 200 may determine the current geographic cell and the geographic cells adjacent to the current geographic cell as the plurality of first geographic cells. In yet another example, the network entity 200 may refer to a correspondence table indicating a correspondence between current geographic cells and an associated plurality of first geographic cells.

For instance, the plurality of first geographic cells may include the current geographic cell. In another example, the plurality of first geographic cells may include only geographic cells located within a single country.

The network entity 200 transmits a plurality of first identifiers, which indicate the plurality of first geographic cells to the transceiver device 100. For instance, in the example illustrated in Fig. 12, the network entity may transmit a list {$GC_{61}$, $GC_{62}$, $GC_{69}$, $GC_{70}$, $GC_{71}$, $GC_{77}$, $GC_{78}$, $GC_{79}$} to the transceiver device 100.

This plurality of first geographic cells forms the registered tracking area (TA) for the transceiver device 100. In other words, a tracking area registered for a transceiver device 100 may be represented by a plurality of first identifiers, each indicating a specific geographic cell. That is, instead of a tracking area identifier (TAI), the plurality of first identifiers may be transmitted to the transceiver device 200. The shape and size of the tracking area is thus determined by the selection of the plurality of geographic cells.

The tracking area itself may be considered as representing a concept used by the network entity 200, as an indicator like the TAI or a TAC is not necessarily broadcasted or transmitted by the network entity 200 and/or a base station 300.

As long as the transceiver device 100 stays within the region indicated by the plurality of first identifiers, it is not required to perform a TAU procedure. In other words, in a case where the transceiver device determines its position, it may determine whether or not the current identifier indicating the current geographic cell is included in the plurality of first geographic identifiers. Further, when the (newly determined) current identifier is included in the plurality of first identifiers, a TAU procedure is not performed. However, when the (newly determined) current identifier is not included in the plurality of first identifiers, the transceiver device performs a TAU procedure, i.e. it transmits, in a registration request message, the current identifier indicating the current geographic cell. The network entity 200 may then determine another set of first identifiers and transmit said updated plurality of first identifiers to the transceiver device 100.

In the example illustrated in Fig. 12, when the UE determines that it is no longer included in the shaded region indicated by the plurality of first identifiers {$GC_{61}$, $GC_{62}$, $GC_{69}$, $GC_{70}$ $GC_{71}$, $GC_{77}$, $GC_{78}$, $GC_{79}$}, the registration request message is transmitted.

In addition or alternatively, the transceiver device 100 may transmit the current identifier when it has changed. In other words, the transceiver device 100 may determine its current identifier and, in a case where the newly determined current identifier differs from the previous current identifier, the transceiver device 100 may transmit the new current identifier to the network entity 200. That is, even if the new current identifier is included in the plurality of first identifiers, the transceiver device informs the network entity of its new current geographic cell.

Whether or not the transceiver device 100 shall transmit a registration request message indicating the new current geographic cell when the current geographic cell changes, but the new current geographic cell is within the plurality of first geographic cells, may be determined based on an indicator signaled to the transceiver device 100. This indicator may be included in the registration accept message. Said indicator may be called a "TAU triggering event indicator (TA or GC)". If the indicator indicates "TA", UE shall perform the TAU procedure upon leaving the region indicated by the plurality of first identifiers. If the indicator indicates "GC", UE shall perform the TAU procedure when the current geographic cell changes. The indicator may be realized by a single bit value, for instance. Alternatively, the presence of an indicator may indicate that TAU procedure shall be performed when the current cell changes and absence of said indicator may indicate that the TAU procedure should be performed when leaving the region defined by the plurality of first identifiers.

With the above, a TA is configured for a transceiver device 100 using a mapping relation between geographic cells and geographic locations on the Earth's surface. Said mapping relation may be common for a plurality of or all transceiver devices within the network system. This may allow for configuring and/or adjusting TAs for each transceiver device in a way that may require less signaling overhead, as the geographic cell definition may be either hardcoded to the transceiver devices or signaled only once.

During a paging procedure, a network entity 200 realizing the access and mobility managing function (AMF) may determine to which base stations 300 (e.g. gNBs) a paging message should be transmitted. For this purpose, the network entity 200 may either transmit the paging message to all base stations 300 connected to the network entity 200. With this approach, the base stations 300 themselves may decide whether a paging message shall be transmitted.

The network entity 200 may determine one or more base stations from among a plurality of base stations connected to the network entity 200. For instance, the network entity 200 may determine the base stations which are involved in serving the region defined by the plurality of first identifiers, i.e. a tracking area comprising the plurality of first geographic cells. Then, the network entity 200 may transmit the paging message to the determined one or more base stations.

For this purpose, the network entity 200 may utilize a mapping relation between coverage areas of the base stations and the geographic cells. Said mapping relation may be informed once to the network entity for base stations having stationary, i.e. non-moving coverage areas. In the case of moving coverage areas/radio cells, which may be the case when the base station is located upon a satellite, the network entity 200 may be informed of the current coverage areas of respective base stations on a regular basis, for instance, or by a precalculated behavior of the coverage areas over time.

In a case of transparent satellites of non-moving, stationary base stations, the mapping relation may be fixed.

In the framework of the above, in an embodiment, the network entity may determine a geographic cells from among the plurality of first geographic cells, wherein the subset of geographic cells is intended to be used for paging a transceiver device. Further, second identifiers indicating the determined geographic cells to the base stations.

The transmitted list of second identifiers may be equal to the list of first identifiers, for example. In other words, the network entity 200 may determine that the entire configured tracking area (the plurality of first geographic cells) should be used for paging the transceiver device. Alternatively, the second identifiers may not include all of the first identifiers, but only a subset of the first identifiers. In other words, the network entity 200 may determine one or more second identifiers from among the plurality of first identifiers, wherein the second geographic cells corresponding to the second identifiers should be used for paging.

In order to allow the network entity 200 to determine the second geographic cells as a subset of the plurality of first geographic cells, the transceiver device 100 may be configured to transmit a position indicator indicating the current position of the transceiver device 200, for instance as obtained from a GNSS unit. This may be performed on a regular basis, for instance. Additionally or alternatively, the transceiver device 200 may be configured to report its current identifier of the current geographic cell as soon as it is detected that the transceiver device 200 has changed the current geographic cell, as described further above, for instance.

For determining the second geographic cells, the network entity 200 may use the current geographic cell of the transceiver device 100 or the current geographic position of the transceiver device 100.

For instance, when using the current geographic cell of the transceiver device 100, the network entity 200 may determine only the current geographic cell, the current geographic cell and the adjacent geographic cells, or the current geographic cell and geographic cells within a threshold distance from the current geographic cell as the second geographic cells indicated by the one or more second identifiers. However, the network entity 200 may determine the second geographic cells in a different manner.

For instance, when using the current geographic position of the transceiver device 100, the network entity 200 may determine only the geographic cell including the current geographic position of the transceiver device, said geographic cell and the adjacent geographic cells, or said geographic cell and geographic cells within a threshold distance from the current geographic position of the transceiver device as the second geographic cells indicated by the one or more second identifiers. However, the network entity 200 may determine the second geographic cells in a different manner.

The network entity 200 may inform the base stations of a TAI list while delivering the paging message. In this case, the TAI and the definition of TAs (correspondence relation between geographic cells and TAs) may be signaled to base stations beforehand.

During a paging procedure for paging a UE (transceiver device), after having received a paging message from the network entity 200 including the list of geographic cells to be used for paging, namely the one or more second identifiers indicating one or more second geographic cell, the gNB (base station) maps the geographic cells and its current physical radio beams and/or cells served by the gNB. The gNB then uses the determined beams/cells to broadcast the paging message. For this purpose, the gNB may use a mapping relation between the second geographic cells and coverage areas of the radio beams and/or radio cells served.

In the following, three examples for determination of the radio beams/radio cells using said mapping relation and the list of second identifiers are described with reference to Fig. 13.

Fig. 13 illustrates coverage areas of satellite-borne base stations overlapping geographic cells making up a tracking area assigned to a UE (an example of a transceiver device 100). As in the example illustrated in Fig. 12, the UE is currently located within the geographic cell $GC_{70}$ and is assigned a tracking area defined by the list $\{GC_{61}, GC_{62}, GC_{69}, GC_{70}, GC_{71}, GC_{77}, GC_{78}, GC_{79}\}$ indicated as shaded geographic cells. The AMF (an example of the network entity 200) is connected to four base stations $gNB_1$, $gNB_2$, $gNB_3$ and $gNB_4$ (examples of base stations 300).

Coverage areas overlapping with above list of geographic cells are indicated by dashed lines. For reasons of clearness, coverage areas of other radio beams/radio cells served by the gNBs are not indicated in the figure. Each gNB may serve one or more radio beams/radio cells. For instance, in the example illustrated in the figure, $gNB_1$ serves at least the indicated two radio beams/radio cells.

In a first example, when AMF intends to page the UE, it understands that $gNB_1$ is currently serving $\{GC_{61}, GC_{69}, GC_{77}, GC_{78}, GC_{79}\}$ and that $gNB_2$ is currently serving $\{GC_{62}, GC_{70}, GC_{71}\}$. Therefore, the AMF determines that only $gNB_1$ and $gNB_2$ serve beams/cells overlapping with the first geographic cells. Further, AMF transmits the paging message including the list of second identifiers $\{GC_{61}, GC_{62}, GC_{69}, GC_{70}, GC_{71}, GC_{77}, GC_{78}, GC_{79}\}$ indicating the entire tracking area, i.e. the plurality of first geographic cells. After having received the paging message from AMF, $gNB_1$ and $gNB_2$ determine their radio beams/cells overlapping the indicated geographic cells and use the determined radio beams/cells for broadcasting the paging message to page the UE. Specifically, $gNB_1$ uses only the indicated two radio beams/radio cells for broadcasting the paging message in order to page the UE. $gNB_2$ uses the radio beam/radio cell indicated by a dotted line for broadcasting the paging message in order to page the UE.

In a second example, when AMF intends to page the UE, the paging message is transmitted to $gNB_1$, $gNB_2$, $gNB_3$ and $gNB_4$, i.e. to all gNBs connected to AMF. The paging message includes the one or more second identifiers as indicated in the first example above. Each gNB determines its radio beams/cells overlapping the indicated geographic cells and use the determined radio beams/cells for broadcasting the paging message to page the UE. Specifically, $gNB_1$ uses only the indicated two radio beams/radio cells for broadcasting the paging message in order to page the UE. $gNB_2$ uses the radio beam/radio cell indicated by a dotted line for broadcasting the paging message in order to page the UE. $gNB_3$ and $gNB_4$, after having determined that they do not serve a radio beam/radio cell overlapping one of the indicated second geographic cells, do not broadcast a paging message in order to page the UE.

In a third example, when AMF intends to page the UE, AMF determines a set of second geographic cells using either the current position of the UE or the current geographic cell of the UE. The current position and/or current geographic cell may be transmitted in terms of a position indicator from the UE to AMF beforehand. This may be performed by the UE regularly, repetitively, and/or upon detecting the change of the current geographic cell. For instance, the AMF determines $\{GC_{70}\}$ as the one or more second geographic identifiers and transmits a paging message to $gNB_1$, $gNB_2$, $gNB_3$ and $gNB_4$. The paging message includes the second identifiers $\{GC_{70}\}$. Each gNB, upon reception of the paging message, determines its radio cells/radio beams serving the geographic cells indicated in the paging message and pages the UE using the determined radio beam/radio cell. Specifically, in the illustrated example, $gNB_2$ uses the indicated radio beam/radio cell for broadcasting a paging message in order to page the UE. $gNB_1$, $gNB_3$ and $gNB_4$ do not broadcast a paging message, as said gNBs do not serve a radio cell/radio beam overlapping the indicated second geographic cell (i.e. $GC_{70}$).

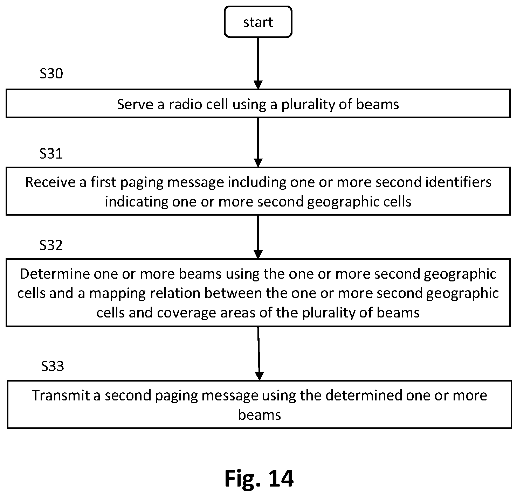

Fig. 14 illustrates the steps of a method performed by a base station according to an embodiment. In step S30, the base station serves a radio cell using a plurality of beams. In step S31, a first paging message is received. The paging message includes one or more second identifiers indicating one or more second geographic cells. Using the indicated second geographic identifiers/cells and a mapping relationship between the one or more second geographic cells and coverage areas of the plurality of beams, one or more beams are determined in step S32. Further, in step S33, a second paging message is transmitted using the determined one or more beams. For instance, the second paging message is transmitted using only the determined one or more beams.

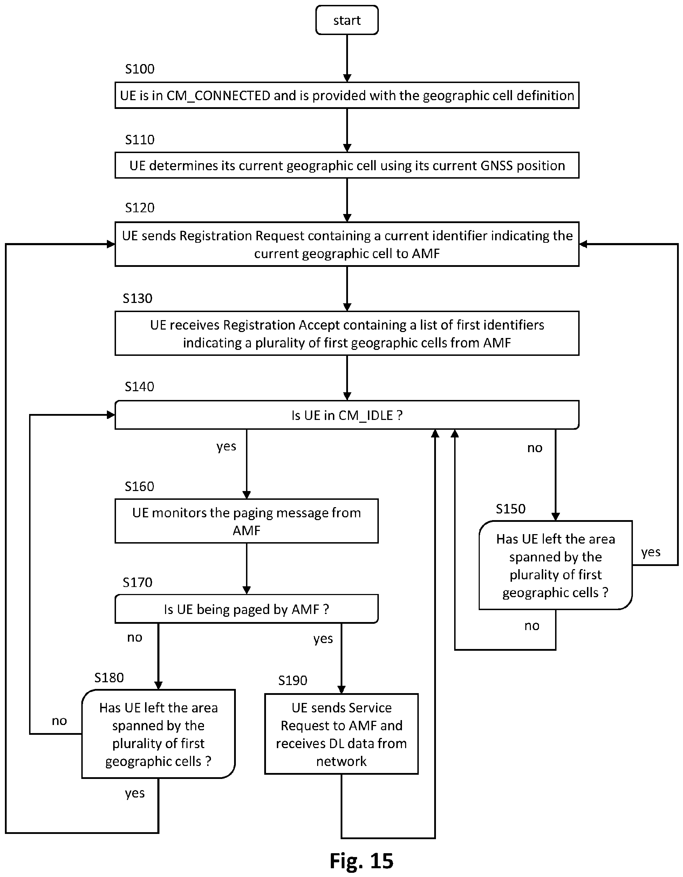

Fig. 15 illustrates the steps of a method performed by a transceiver device (e.g. UE) according to an embodiment.

As indicated in step S100, the UE is in CM_CONNECTED and is provided with the geographic cell definition. For instance, the UE may be pre-configured with the geographic cell definition (i.e. the mapping relation between geographic cells and geographic locations upon the Earth's surface) or the definition of geographic cells may be signaled by RRC. In step S110, UE determines its current geographic cell using its current geographic position. For instance, the UE may obtain its current position from a GNSS unit and, using the mapping relation between geographic cells and geographic locations, determine its current geographic cell.

In step S120, UE sends a registration request message to a network entity (e.g. AMF). The registration request message includes a current identifier indicating the current geographic cell. Further, in step S130, the UE receives a registration accept message containing a list of first identifiers indicating a plurality of first geographic cells from AMF.

In step S140, it is determined whether or not UE is in CM_IDLE. In a case where it is determined that the UE is not/has not moved to CM_IDLE (no in step S140), the UE determines whether or not it has left the area defined by the plurality of first identifiers, i.e. the plurality of first geographic cells in step S150. In a case where UE has not left said area (no in step S150), the method proceeds to step S140 again, as UE might be instructed by the network anytime to move to RRC_IDLE/CM_IDLE. On the other hand, in a case where the UE has left the area spanned by the plurality of first geographic cells (yes in step S150), the method proceeds to step S120.

In a case where UE is determined as being in CM_IDLE (yes in step S140), UE monitors paging occasions for receiving a paging message from AMF in step S160. In step S170, it is determined whether or not UE is being paged by AMF. In a case where UE is not paged by AMF (no in step S170), it is determined in step S180 whether or not the UE has left the area spanned by the plurality of first geographic cells. In a case where the US has not left said area (no in step S180), the method proceeds to step S140, as UE might have uplink traffic anytime and would intend to move to RRC_CONNECTED/CM_CONNECTED. On the other hand, when the UE has left said area (yes in step S180), UE sends a registration request to AMF in step S120.

When the UE is being paged in step S170 (yes in step S170), UE sends a service request message to AMF in step S190 and receives downlink (DL) data from the network. For instance, the UE may receive scheduling information for scheduling resources for transmission of data. After reception of the DL data, it is proceeded to step S140 again.

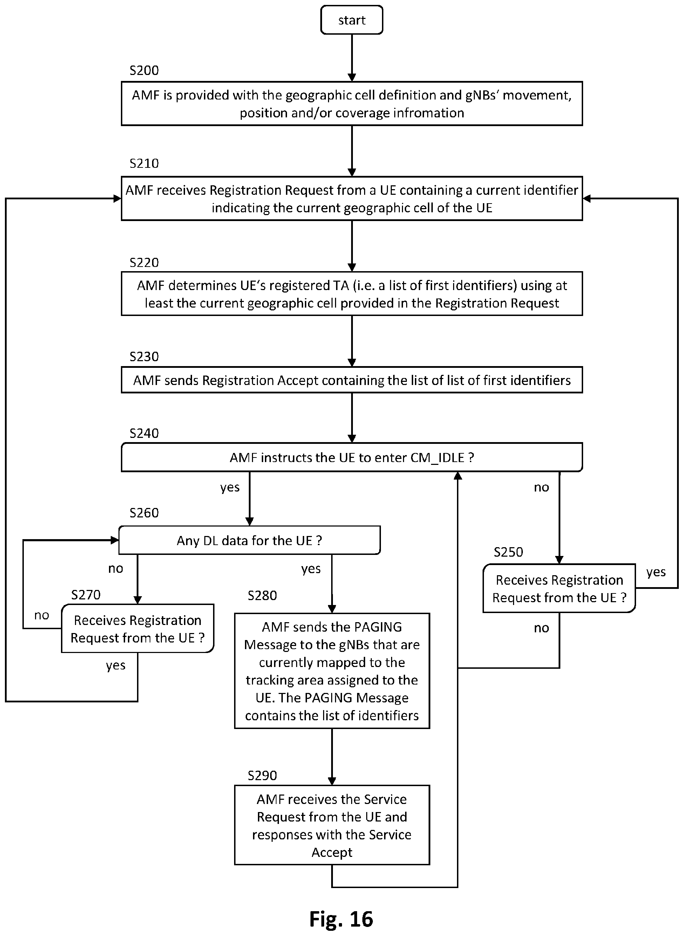

Fig. 16 illustrates the steps of a method performed by a network entity (e.g. AMF) according to an embodiment.

In step S200, AMF is provided with the geographic cell definition. For instance, the AMF may be pre-configured with the geographic cell definition (i.e. the mapping relation between geographic cells and geographic locations upon the Earth's surface). Further, in step S210, the AMF receives a registration request message from a transceiver device (e.g. a UE) containing a current identifier indicating a current geographic cell of the UE.

In step S220, AMF determines a list of first identifiers indicating a plurality of geographic cells. In other words, the AMF determines a tracking area, composed by the plurality of first geographic cells to be registered for the UE. The plurality of first geographic cells includes the current geographic cell of the UE. In step S230, a registration accept message is transmitted from AMF to the UE, wherein the registration accept message includes the plurality of first identifiers indicating the plurality of first geographic cells.

In step S240, it is determined whether or not UE is instructed by AMF to enter CM_IDLE. In a case where UE is not instructed to enter CM_IDLE (no in step S240), it is determined whether or not a registration request message is received from the UE in step S250. In a case where the AMF does not receive a registration request message from the UE (no in step S250), it is proceeded to step S240. However, in a case where the AMF has received a registration request message from the UE (yes in step S250), it is proceed to step S210.

When AMF does instruct the UE to enter CM_IDL (yes in step S240), it is determined in step S260 whether or not there is any downlink data to be transmitted to the UE. In a case where there is no data to be transmitted to the UE (no in step S260), it is determined in step S270 whether or not a registration request message is received from the UE. In a case where no registration request message is received (no in step S270), the method proceeds to step S260. In a case where a registration request message is received from the UE (yes in step S270), the method proceeds to step S210.

On the other hand, when it is determined in step S260 that there is data to be transmitted to the UE (yes in step S260), AMF sends a paging message to gNBs whose coverage area(s) are currently mapped to any one of the first geographic cells making up the tracking area assigned to the UE. The paging message includes a list of identifiers indicating geographic cells to be used for paging the UE. For instance, the list of identifiers may be the list of first identifiers or the list of second identifiers, as described further above.

After having transmitted the paging message, AMF receives the service request message from the UE in step S290 and responses with a service accept message. After step S290, it is proceeded to step S240.

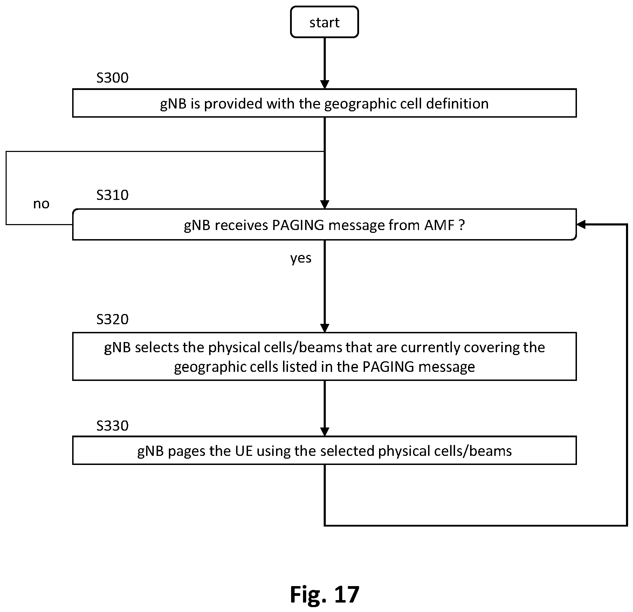

Fig. 17 illustrates the steps of a method performed by a base station (e.g. gNB) according to an embodiment.

In step S300, the gNB is provided with the definition of the geographic cells. For instance, the gNB may be pre-configured with the geographic cell definition (i.e. the mapping relation between geographic cells and geographic locations upon the Earth's surface) or the definition of geographic cells may be signaled.

In step S310, it is determined whether or not a paging message is received from AMF. The paging message may include one or more second identifiers indicating one or more second geographic cells to be used for paging the UE. In a case where no paging message is received from AMF (no in step S310), step S310 is repeatedly performed. However, in a case where a paging message is received by the UE from AMF (yes in step S310), it is proceeded to step S320.

In step S320, gNB selects physical radio beams/radio cells that are currently covering any one of the geographic cells listed in the paging message.

In step S330, gNB broadcasts a paging message using the selected physical radio beams/radios cells selected in step S330. Afterwards, the method proceeds to step S310 again.

The following table 1 illustrates an excerpt of the content of a registration request message as defined in 3GPP TS 24.501 v16.5.1: "Non-Access-Stratum (NAS) protocol for 5G systems (5GS)", section 8.2.6, which is modified according to an embodiment of the present disclosure:

**Table 1:** Content of a registration request message according to an embodiment

| IEI | Information Element | Type/Reference |
|---|---|---|
| | Extended protocol discriminator | Extended Protocol discriminator 9.2 |
| | Security header type | Security header type 9.3 |
| | Spare half octet | Spare halt octet 9.5 |
| | Registration request message identity | Message type 9.7 |
| | 5GS registration type | 5GS registration type 9.11.3.7 |
| | ngKSI | NAS key set identifier 9.11.3.32 |
| | 5GS mobile identity | 5GS mobile identity 9.11.3.4 |
| C- | Non-current native NAS key set identifier | NAS key set identifier 9.11.3.32 |
| 10 | 5GMM capability | 5GMM capability 9.11.3.1 |
| 2E | UE security capability | UE security capability 9.11.3.54 |
| 2F | Requested NSSAI | NSSAI 9.11.3.37 |
| 17 | S1 UE network capability | S1 UE network capability 9.11.3.48 |
| 40 | Uplink data status | Uplink data status 9.11.3.57 |
| 50 | PDU session status | PDU session status 9.11.3.44 |

(continued)

| IEI | Information Element | Type/Reference |
|-----|---------------------|----------------|
| B- | MICO indication | MICO indication 9.11.3.31 |
| 2B | UE status | UE status 9.11.3.56 |
| 77 | Additional GUTI | 5GS mobile identity 9.11.3.4 |
| 25 | Allowed PDU session status | Allowed PDU session status 9.11.3.13 |
| 18 | UE's usage setting | UE's usage setting 9.11.3.55 |
| 51 | Requested DRX parameters | 5GS DRX parameters 9.11.3.2A |
| 70 | EPS NAS message container | EPS NAS message container 9.11.3.24 |
| 74 | LADN indication | LADN indication 9.11.3.29 |
| 8- | Payload container type | Payload container type 9.11.3.40 |
| 7B | Payload container | Payload container 9.11.3.39 |
| 9- | Network slicing indication | Network slicing indication 9.11.3.36 |
| 53 | 5GS update type | 5GS update type 9.11.3.9A |
| 71 | NAS message container | NAS message container 9.11.3.33 |
| **XX** | **GNSS reporting container** | **x.x.x** |
| **XX** | **Last visited GCI** | **5GS geographic cell identity** |

Modifications with respect to the registration request of TS 24.501 are given in bold font in table 1. The references indicated in the table are references to sections within TS 24.501.

In contrast to the registration request given in TS 24.501, the registration request message according to the embodiment does not include the last visited registered TAI. Instead, the last visited GCI, i.e. the identifier of the last visited geographic cell is included. Further, in an embodiment, the registration request message may include a GNSS reporting container, which may include a position indicator indicating a current position of a transceiver device.

The following table 2 illustrates an excerpt of the content of a registration accept message as defined in 3GPP TS 24.501 v16.5.1: "Non-Access-Stratum (NAS) protocol for 5G systems (5GS)", section 8.2.7, which is modified according to an embodiment of the present disclosure:

**Table 2:** Content of a registration accept message according to an embodiment

| IEI | Information Element | Type/Reference |
|-----|---------------------|----------------|
| | Registration accept message identity | Message type 9.7 |

(continued)

| IEI | Information Element | Type/Reference |
|---|---|---|
| | 5GS registration result | 5GS registration result 9.11.3.6 |
| 77 | 5G-GUTI | 5GS mobile identity 9.11.3.4 |
| 4A | Equivalent PLMNs | PLMN list 9.11.3.45 |
| **XX** | **TAU triggering event indication (TA or GC)** | **x.x.x** |
| 15 | Allowed NSSAI | NSSAI 9.11.3.37 |
| 11 | Rejected NSSAI | Rejected NSSAI 9.11.3.46 |
| 31 | Configured NSSAI | NSSAI 9.11.3.37 |
| 21 | 5GS network feature support | 5GS network feature support 9.11.3.5 |
| 50 | PDU session status | PDU session status 9.11.3.44 |
| 26 | PDU session reactivation result | PDU session reactivation result 9.11.3.42 |
| 72 | PDU session reactivation result error cause | PDU session reactivation result error cause 9.11.3.43 |
| 79 | LADN information | LADN information 9.11.3.30 |
| B- | MICO indication | MICO indication 9.11.3.31 |
| 9- | Network slicing indication | Network slicing indication 9.11.3.36 |
| 27 | Service area list | Service area list 9.11.3.49 |
| 5E | T3512 value | GPRS timer 3 9.11.2.5 |
| 5D | Non-3GPP de-registration timer value | GPRS timer 2 9.11.2.4 |
| 16 | T3502 value | GPRS timer 2 9.11.2.4 |
| 34 | Emergency number list | Emergency number list 9.11.3.23 |
| 7A | Extended emergency number list | Extended emergency number list 9.11.3.26 |
| 73 | SOR transparent container | SOR transparent container 9.11.3.51 |
| 78 | EAP message | EAP message 9.11.2.2 |

(continued)

| IEI | Information Element | Type/Reference |
|---|---|---|
| A- | NSSAI inclusion mode | NSSAI inclusion mode<br>9.11.3.37A |
| 76 | Operator-defined access category definitions | Operator-defined access category definitions<br>9.11.3.38 |
| 51 | Negotiated DRX parameters | 5GS DRX parameters<br>9.11.3.2A |
| D- | Non-3GPP NW policies | Non-3GPP NW provided policies<br>9.11.3.36A |
| 60 | EPS bearer context status | EPS bearer context status<br>9.11.3.23A |
| 9- | Network slicing indication | Network slicing indication<br>9.11.3.36 |
| **XX** | **GNSS reporting indication** | **x.x.x** |
| **XX** | **GCI list** | **5GS geographic cell identity list x.x.x** |

Modifications with respect to the registration accept of TS 24.501 are given in bold font in table 2. The references indicated in the table are references to sections within TS 24.501.

In contrast to the registration accept given in TS 24.501, the registration accept message according to the embodiment includes the "GCI list" indicating the plurality of first identifiers indicating the plurality of first geographic cells. Further, the registration accept message may include the "TAU triggering event indication (TA or GC)" (an indicator) indicating whether the transceiver device shall send a registration request message upon change of the current geographic cell. Further, in an embodiment, the registration accept message may include the "GNSS reporting indication" indicating whether or not the transceiver device should report its GNSS position information to AMF.

The following table 3 illustrates an excerpt of the content of a paging message for transmission from AMF to gNB as defined in 3GPP TS 38.413 v16.2.0: "NG Application Protocol (NGAP)", section 9.2.4.1, which is modified according to an embodiment of the present disclosure.

Modifications with respect to the paging message of TS 38.413 are given in bold font in table 3. The references indicated in the table are references to sections within TS 38.413.

In contrast to the paging message given in TS 38.413, the paging message according to the embodiment does not include the TAI list for paging, but rather the list of geographic cells to be used for paging the UE ("GCI List for Paging", "GCI List for Paging Item" and "GCI").

Table 3: Content of a paging message according to an embodiment

| IE/Group Name | Presence | Range | IE type and reference | Semantics descriptions | Criticality | Assigned Criticality |
|---|---|---|---|---|---|---|
| Message Type | M | | 9.3.1.1 | | YES | ignore |
| UE Paging Identity | M | | 9.3.3.18 | | YES | ignore |
| Paging DRX | O | | 9.3.1.90 | | YES | ignore |
| **GCI List for Paging** | - | - | - | - | **YES** | **ignore** |
| **> GCI List for Paging Item** | - | **1..<maxnoofGCIforPaging>** | - | - | - | - |
| **>> GCI** | **M** | - | **x.x.x** | - | - | - |
| Paging Priority | O | | 9.3.1.78 | | YES | ignore |
| UE Radio Capability for Paging | O | | 9.3.1.68 | | YES | ignore |
| Paging Origin | O | | 9.3.3.22 | | YES | ignore |
| Assistance Data for Paging | O | | 9.3.1.69 | | YES | ignore |

Whereas a TAI may be assigned to a UE individually, GCIs (geographic cell identifiers) may be common for all transceiver device. Further, whereas a TAI is composed by PLMN ID and TAC, GCI alone can be valid within the entire Earth. That is, a geographic cell identifier may be uniquely assigned to a geographic cell. Further, whereas TAs may overlap with each other, geographic cells according to the present disclosure do not overlap with each other according to an embodiment. For instance, the geographic cells may be configured in a static manner.

The above descriptions of embodiments or examples are also applicable to a UE in RRC_INACTIVE, wherein the Tracking Area (TA) is replaced with RAN-Based Notification Area (RNA), the network entity (AMF) is replaced with the base station (gNB), the registration request messages is replaced with RRCResumeRequest and the registration accept message is replaced with RRCRelease message.

In the following, embodiments of the present disclosure are summarized.

Provided is a transceiver device, comprising circuitry which, in operation, determines a current geographic cell using a current geographic position of the transceiver device and a mapping relation between geographic locations and geographic cells; and a transceiver which, in operation, transmits, in a registration request message, a current identifier indicating the current geographic cell, and receives, in a registration accept message, a plurality of first identifiers indicating a plurality of first geographic cells.

In some embodiments, geographic cells are non-overlapping stationary regions defined upon the Earth's surface with respect to at least one geographic location on the Earth's surface.

In some embodiments, the circuitry, in operation, obtains the current position using a global navigation satellite system, GNSS, unit.

For instance, the circuitry, in operation, obtains the current position using the GNSS unit repetitively.

In some embodiments, the transceiver device comprises the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the circuitry, in operation, determines the current geographic cell repetitively.

In some embodiments, the circuitry, in operation, determines whether the current geographic cell is still included in the plurality of first geographic cells, and controls the transceiver to transmit the registration request message when the current geographic cell is no longer included in the plurality of first geographic cells.

In some embodiments, the registration accept message includes an indicator indicating that a registration request message should be transmitted by the transceiver device upon change of the current geographic cell; and the circuitry, in operation, controls the transceiver to transmit the registration request message when the current geographic cell changes.

In some embodiments, the registration accept message includes an indicator indicating whether or not a registration request message should be transmitted by the transceiver device upon change of the current geographic cell, under the situation that the current geographic cell is still included in the plurality of first geographic cells; and the circuitry, in operation, control the transceiver to transmit the registration request message when the current geographic cell changes, in a case where the indicator indicates that the registration request message should be transmitted by the transceiver device upon change of the current geographic cell, under the situation that the current geographic cell is still included in the plurality of first geographic cells.

In some embodiments, the transceiver, in operation, transmits the current identifier indicating the current geographic cell or a position indicator indicating the current geographic position of the transceiver device.

For instance, the transceiver, in operation, repetitively transmits the current identifier indicating the current geographic cell or a position indicator indicating the current geographic position of the transceiver device.

Further provided is a method, comprising determining a current geographic cell using a current geographic position of a transceiver device and a mapping relation between geographic locations and geographic cells; transmitting, in a registration request message, a current identifier indicating the current geographic cell; and receiving, in a registration accept message, a plurality of first identifiers indicating a plurality of first geographic cells.

In some embodiment, the method is performed by a transceiver device.

In some embodiments, geographic cells are non-overlapping stationary regions defined upon the Earth's surface with respect to at least one geographic location on the Earth's surface.

In some embodiments, the method comprises obtaining the current position using a global navigation satellite system, GNSS, unit.

For instance, the current position is obtained repetitively using the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the current geographic cell is determined repetitively.

In some embodiments, the method comprises determining whether the current geographic cell is still included in the plurality of first geographic cells; and transmitting the registration request message when the current geographic cell is no longer included in the plurality of first geographic cells.

In some embodiments, the registration accept message includes an indicator indicating that a registration request message should be transmitted upon change of the current geographic cell; and the method comprises transmitting the registration request message when the current geographic cell changes.

In some embodiments, the registration accept message includes an indicator indicating whether or not a registration request message should be transmitted upon change of the current geographic cell, under the situation that the current geographic cell is still included in the plurality of first geographic cells; and the method comprises transmitting the registration request message when the current geographic cell changes, in a case where the indicator indicates that the registration request message should be transmitted upon change of the current geographic cell, under the situation that the current geographic cell is still included in the plurality of first geographic cells.

In some embodiments, the method comprises transmitting the current identifier indicating the current geographic cell or a position indicator indicating the current geographic position.

For instance, the current identifier indicating the current geographic cell or a position indicator indicating the current geographic position is transmitted repetitively.

Further provided is a network entity, comprising a transceiver which, in operation, receives, in a registration request message, a current identifier indicating a current geographic cell of a transceiver device, and transmits, in a registration accept message, a plurality of first identifiers indicating a plurality of first geographic cells; and circuitry which, in operation, determines the plurality of first geographic cells using at least the current geographic cell of the transceiver device and a mapping relation between geographic locations and geographic cells.

For instance, the network entity may be realized by network system including one or more devices, by an access and mobility managing device, or by a base station.

In some embodiments, the registration accept message includes an indicator indicating that a registration request message should be transmitted by the transceiver device upon change of the current geographic cell.

In some embodiments, the registration accept message includes an indicator indicating whether or not a registration request message should be transmitted by the transceiver device upon change of the current geographic cell, under the situation that the current geographic cell is still included in the plurality of first geographic cells.

In some embodiments, in a paging procedure for paging the transceiver device: the circuitry, in operation, determines one or more second geographic cells from among the plurality of first geographic cells; and the transceiver, in operation, transmits, in a first paging message, one or more second identifiers indicating the one or more second geographic cells.

In some embodiments, the transceiver, in operation, receives the current identifier indicating the current geographic cell of the transceiver device or a position indicator indicating a current position of the transceiver device; and in the paging procedure for paging the transceiver device: the circuitry, in operation, determines the one or more second geographic cells from among the plurality of first geographic cells using the current geographic cell or, respectively, the current position of the transceiver device and the mapping relation between geographic locations and geographic cells.

In some embodiments, the transceiver, in operation, repetitively receives the current identifier indicating the current geographic cell of the transceiver device or a position indicator indicating a current position of the transceiver device; and in the paging procedure for paging the transceiver device: the circuitry, in operation, determines the one or more second geographic cells from among the plurality of first geographic cells using the current geographic cell or, respectively, the current position of the transceiver device and the mapping relation between geographic locations and geographic cells.

In some embodiments, the transceiver, in operation, after transmitting a registration accept message including an indicator indicating that a registration request message should be transmitted by the transceiver device upon change of the current geographic cell, receives no registration request message; and in the paging procedure for paging the transceiver device: the circuitry, in operation, determines the one or more second geographic cells from among the plurality of first geographic cells.

In some embodiments, in the paging procedure for paging the transceiver device: the circuitry, in operation, determines one or more base stations from among a plurality of base stations, using the one or more second geographic cells and a mapping relation between coverage areas of the plurality of base stations and the one or more second geographic cells; and the transceiver, in operation, transmits the first paging message to the determined one or more base stations.

Further provided is a method, comprising receiving, in a registration request message, a current identifier indicating a current geographic cell of a transceiver device; determining a plurality of first geographic cells using at least the current geographic cell of the transceiver device and a mapping relation between geographic locations and geographic cells; and transmitting, in a registration accept message, a plurality of first identifiers indicating the plurality of first geographic cells.

In some embodiments, the method is performed by a network entity.

For instance, the network entity may be realized by network system including one or more devices, by an access and mobility managing device, or by a base station.

In some embodiments, the registration accept message includes an indicator indicating that a registration request message should be transmitted by the transceiver device upon change of the current geographic cell.

In some embodiments, the registration accept message includes an indicator indicating whether or not a registration request message should be transmitted by the transceiver device upon change of the current geographic cell, under the situation that the current geographic cell is still included in the plurality of first geographic cells.

In some embodiments, the method comprises in a paging procedure for paging the transceiver device: determining one or more second geographic cells from among the plurality of first geographic cells; and transmitting, in a first paging message, one or more second identifiers indicating the one or more second geographic cells.

In some embodiments, the method comprises receiving the current identifier indicating the current geographic cell of the transceiver device or a position indicator indicating a current position of the transceiver device; and in the paging procedure for paging the transceiver device: determining the one or more second geographic cells from among the plurality of first geographic cells using the current geographic cell or, respectively, the current position of the transceiver device and the mapping relation between geographic locations and geographic cells.

In some embodiments, the method comprises: repetitively receiving the current identifier indicating the current geographic cell of the transceiver device or a position indicator indicating a current position of the transceiver device; and in the paging procedure for paging the transceiver device: determining the one or more second geographic cells from among the plurality of first geographic cells using the current geographic cell or, respectively, the current position of the transceiver device and the mapping relation between geographic locations and geographic cells.

In some embodiments, the method comprises: after transmitting a registration accept message including an indicator indicating that a registration request message should be transmitted by the transceiver device upon change of the current geographic cell, receiving no registration request message; and in the paging procedure for paging the transceiver device: determining the one or more second geographic cells from among the plurality of first geographic cells.

In some embodiments, the method comprises in the paging procedure for paging the transceiver device: determining one or more base stations from among a plurality of base stations, using the one or more second geographic cells and a mapping relation between coverage areas of the plurality of base stations and the one or more second geographic cells; and transmitting the first paging message to the determined one or more base stations.

Further provided is a base station, comprising a transceiver which, in operation, serves a radio cell using a plurality of beams, and receives a first paging message including one or more second identifiers indicating one or more second geographic cells; and circuitry which, in operation, determines one or more beams using the one or more second geographic cells and a mapping relation between the one or more second geographic cells and coverage areas of the plurality of beams, and controls the transceiver to transmit a second paging message using the determined one or more beams.

In some embodiments, the base station is configured to operate on a satellite.

Further provided is method, comprising serving a radio cell using a plurality of beams; receiving a first paging message including one or more second identifiers indicating one or more second geographic cells; determining one or more beams using the one or more second geographic cells and a mapping relation between the one or more second geographic cells and coverage areas of the plurality of beam; and transmitting a second paging message using the determined one or more beams.

In some embodiments, the method is performed by a base station.

In some embodiments, the base station is configured to operate on a satellite.

Further provided is a method performed by a network system including a transceiver device and a network entity, comprising determining, by the transceiver device, a current geographic cell using a current geographic position of the transceiver device and a mapping relation between geographic locations and geographic cells; transmitting, from the transceiver device to the network entity, in a registration request message, a current identifier indicating the current geographic cell; determining, by the network entity, a plurality of first geographic cells using at least the current geographic cell of the transceiver device and the mapping relation between geographic locations and geographic cells; and transmitting, from the network entity to the transceiver device, in a registration accept message, a plurality of first identifiers indicating a plurality of first geographic cells.

For example, the network entity is any one of above described network entities or their embodiments.

For example, the transceiver device is any one of the above described transceiver devices or their embodiments.

Further provided is a transceiver device, comprising circuitry which, in operation, determines a current geographic cell using a current geographic position of the transceiver device and a mapping relation between geographic locations and geographic cells; and a transceiver which, in operation, transmits, in an RRC resume request message, a current identifier indicating the current geographic cell, and receives, in an RRC release message, a plurality of first identifiers indicating a plurality of first geographic cells.

In some embodiments, geographic cells are non-overlapping stationary regions defined upon the Earth's surface with respect to at least one geographic location on the Earth's surface.

In some embodiments, the circuitry, in operation, obtains the current position using a global navigation satellite system, GNSS, unit.

For instance, the circuitry, in operation, obtains the current position using the GNSS unit repetitively.

In some embodiments, the transceiver device comprises the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the circuitry, in operation, determines the current geographic cell repetitively.

In some embodiments, the circuitry, in operation, determines whether the current geographic cell is still included in the plurality of first geographic cells, and controls the transceiver to transmit the RRC resume request message when the current geographic cell is no longer included in the plurality of first geographic cells.

In some embodiments, the RRC release message includes an indicator indicating that an RRC resume request message should be transmitted by the transceiver device upon change of the current geographic cell; and the circuitry, in operation, controls the transceiver to transmit the RRC resume request message when the current geographic cell changes.

In some embodiments, the RRC release message includes an indicator indicating whether or not an RRC resume request message should be transmitted by the transceiver device upon change of the current geographic cell, under the situation that the current geographic cell is still included in the plurality of first geographic cells; and the circuitry, in operation, control the transceiver to transmit the RRC resume request message when the current geographic cell changes, in a case where the indicator indicates that the RRC resume request message should be transmitted by the transceiver device upon change of the current geographic cell, under the situation that the current geographic cell is still included in the plurality of first geographic cells.

In some embodiments, the transceiver, in operation, transmits the current identifier indicating the current geographic cell or a position indicator indicating the current geographic position of the transceiver device.

For instance, the transceiver, in operation, repetitively transmits the current identifier indicating the current geographic cell or a position indicator indicating the current geographic position of the transceiver device.

Further provided is a method, comprising determining a current geographic cell using a current geographic position of a transceiver device and a mapping relation between geographic locations and geographic cells; transmitting, in an RRC resume request message, a current identifier indicating the current geographic cell; and receiving, in an RRC release message, a plurality of first identifiers indicating a plurality of first geographic cells.

In some embodiment, the method is performed by a transceiver device.

In some embodiments, geographic cells are non-overlapping stationary regions defined upon the Earth's surface with respect to at least one geographic location on the Earth's surface.

In some embodiments, the method comprises obtaining the current position using a global navigation satellite system, GNSS, unit.

For instance, the current position is obtained repetitively using the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the current geographic cell is determined repetitively.

In some embodiments, the method comprises determining whether the current geographic cell is still included in the plurality of first geographic cells; and transmitting the RRC resume request message when the current geographic cell is no longer included in the plurality of first geographic cells.

In some embodiments, the RRC release message includes an indicator indicating that an RRC resume request message should be transmitted upon change of the current geographic cell; and the method comprises transmitting the RRC resume request message when the current geographic cell changes.

In some embodiments, the RRC release message includes an indicator indicating whether or not an RRC resume request message should be transmitted upon change of the current geographic cell, under the situation that the current geographic cell is still included in the plurality of first geographic cells; and the method comprises transmitting the registration request message when the current geographic cell changes, in a case where the indicator indicates that the registration request message should be transmitted upon change of the current geographic cell, under the situation that the current geographic cell is still included in the plurality of first geographic cells.

In some embodiments, the method comprises transmitting the current identifier indicating the current geographic cell or a position indicator indicating the current geographic position.

For instance, the current identifier indicating the current geographic cell or a position indicator indicating the current geographic position is transmitted repetitively.

Further provided is a base station, comprising a transceiver which, in operation, receives, in an RRC resume request message, a current identifier indicating a current geographic cell of a transceiver device, and transmits, in an RRC release message, a plurality of first identifiers indicating a plurality of first geographic cells; and circuitry which, in operation, determines the plurality of first geographic cells using at least the current geographic cell of the transceiver device and a mapping relation between geographic locations and geographic cells.

In some embodiments, the RRC release message includes an indicator indicating that an RRC resume request message should be transmitted by the transceiver device upon change of the current geographic cell.

In some embodiments, the RRC release message includes an indicator indicating whether or not an RRC resume request message should be transmitted by the transceiver device upon change of the current geographic cell, under the situation that the current geographic cell is still included in the plurality of first geographic cells.

In some embodiments, in a paging procedure for paging the transceiver device, the circuitry, in operation, determines one or more second geographic cells from among the plurality of first geographic cells; and the transceiver, in operation, transmits, in a first paging message, one or more second identifiers indicating the one or more second geographic cells.

In some embodiments, the transceiver, in operation, receives the current identifier indicating the current geographic cell of the transceiver device or a position indicator indicating a current position of the transceiver device; and in the paging procedure for paging the transceiver device: the circuitry, in operation, determines one or more second geographic cells from among the plurality of first geographic cells using the current geographic cell or, respectively, the current position of the transceiver device and the mapping relation between geographic locations and geographic cells.

In some embodiments, the transceiver, in operation, repetitively receives the current identifier indicating the current geographic cell of the transceiver device or a position indicator indicating a current position of the transceiver device; and in the paging procedure for paging the transceiver device: the circuitry, in operation, determines one or more second geographic cells from among the plurality of first geographic cells using the current geographic cell or, respectively, the current position of the transceiver device and the mapping relation between geographic locations and geographic cells.

In some embodiments, the transceiver, in operation, after transmitting an RRC release message including an indicator indicating that an RRC resume request message should be transmitted by the transceiver device upon change of the current geographic cell, receives no RRC resume request message; and in the paging procedure for paging the transceiver device: the circuitry, in operation, determines the one or more second geographic cells from among the plurality of first geographic cells.

In some embodiments, in the paging procedure for paging the transceiver device: the circuitry, in operation, determines one or more base stations from among a plurality of base stations, using the one or more second geographic cells and a mapping relation between coverage areas of the plurality of base stations and the one or more second geographic cells; and the transceiver, in operation, transmits the first paging message to the determined one or more base stations.

In some embodiments, the transceiver, in operation, serves a radio cell using a plurality of beams; and circuitry which, in operation, determines one or more beams using the one or more second geographic cells and a mapping relation between the one or more second geographic cells and coverage areas of the plurality of beams, and controls the transceiver to transmit a paging message using the determined one or more beams.

In some embodiments, the base station is configured to operate on a satellite.

Further provided is a method, comprising receiving, in an RRC resume request message, a current identifier indicating a current geographic cell of a transceiver device; determining a plurality of first geographic cells using at least the current geographic cell of the transceiver device and a mapping relation between geographic locations and geographic cells; and transmitting, in an RRC release message, a plurality of first identifiers indicating the plurality of first geographic cells.

In some embodiments, the method is performed by a base station.

In some embodiments, the RRC release message includes an indicator indicating that an RRC resume request message should be transmitted by the transceiver device upon change of the current geographic cell.

In some embodiments, the RRC release message includes an indicator indicating whether or not an RRC resume request message should be transmitted by the transceiver device upon change of the current geographic cell, under the situation that the current geographic cell is still included in the plurality of first geographic cells.

In some embodiments, in a paging procedure for paging the transceiver device, the method comprises: determining one or more second geographic cells from among the plurality of first geographic cells; and transmitting, in a first paging message, one or more second identifiers indicating the one or more second geographic cells.

In some embodiments, the method comprises receiving the current identifier indicating the current geographic cell of the transceiver device or a position indicator indicating a current position of the transceiver device; and in the paging procedure for paging the transceiver device: determining one or more second geographic cells from among the plurality of first geographic cells using the current geographic cell or, respectively, the current position of the transceiver device and the mapping relation between geographic locations and geographic cells.

In some embodiments, the method comprises repetitively receiving the current identifier indicating the current geographic cell of the transceiver device or a position indicator indicating a current position of the transceiver device; and in the paging procedure for paging the transceiver device: determining one or more second geographic cells from among the plurality of first geographic cells using the current geographic cell or, respectively, the current position of the transceiver device and the mapping relation between geographic locations and geographic cells.

In some embodiments, the method comprises: after transmitting an RRC release message including an indicator indicating that an RRC resume request message should be transmitted by the transceiver device upon change of the current geographic cell, receiving no RRC resume request message; and in the paging procedure for paging the transceiver device: determining the one or more second geographic cells from among the plurality of first geographic cells.

In some embodiments, the method comprises: in the paging procedure for paging the transceiver device, determining one or more base stations from among a plurality of base stations, using the one or more second geographic cells and a mapping relation between coverage areas of the plurality of base stations and the one or more second geographic cells; and, transmitting the first paging message to the determined one or more base stations

In some embodiments, the method comprises serving a radio cell using a plurality of beams; determining one or more beams using the one or more second geographic cells and a mapping relation between the one or more second geographic cells and coverage areas of the plurality of beams; and transmitting a paging message using the determined one or more beams.

In some embodiments, the base station is configured to operate on a satellite.

Further provided is a transceiver device, comprising a transceiver which, in operation, receives, in an RRC release message, a plurality of first identifiers indicating a plurality of first geographic cells; and circuitry which, in operation, controls the transceiver device to enter an RRC inactive state.

In some embodiments, the circuitry, in operation, determines a current geographic cell using a current geographic position of the transceiver device and a mapping relation between geographic locations and geographic cells.

In some embodiments, geographic cells are non-overlapping stationary regions defined upon the Earth's surface with respect to at least one geographic location on the Earth's surface.

In some embodiments, the circuitry, in operation, obtains the current position using a global navigation satellite system, GNSS, unit.

For instance, the circuitry, in operation, obtains the current position using the GNSS unit repetitively.

In some embodiments, the transceiver device comprises the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the circuitry, in operation, determines the current geographic cell repetitively.

In some embodiments, the circuitry, in operation, determines whether the current geographic cell is still included in the plurality of first geographic cells, and controls the transceiver to transmit an RRC resume request message when the current geographic cell is no longer included in the plurality of first geographic cells.

In some embodiments, the RRC release message includes an indicator indicating that an RRC resume request message should be transmitted by the transceiver device upon change of the current geographic cell; and the circuitry, in operation, controls the transceiver to transmit the RRC resume request message when the current geographic cell changes.

In some embodiments, the RRC release message includes an indicator indicating whether or not an RRC resume request message should be transmitted by the transceiver device upon change of the current geographic cell, under the situation that the current geographic cell is still included in the plurality of first geographic cells; and the circuitry, in operation, control the transceiver to transmit the RRC resume request message when the current geographic cell changes, in a case where the indicator indicates that the RRC resume request message should be transmitted by the transceiver device upon change of the current geographic cell, under the situation that the current geographic cell is still included in the plurality of first geographic cells.

In some embodiments, the transceiver, in operation, transmits the current identifier indicating the current geographic cell or a position indicator indicating the current geographic position of the transceiver device.

For instance, the transceiver, in operation, repetitively transmits the current identifier indicating the current geographic cell or a position indicator indicating the current geographic position of the transceiver device.

Further provided is a method, comprising receiving, in an RRC release message, a plurality of first identifiers indicating a plurality of first geographic cells; and entering an RRC inactive state.

In some embodiment, the method is performed by a transceiver device.

In some embodiments, the method comprises determining a current geographic cell using a current geographic position of the transceiver device and a mapping relation between geographic locations and geographic cells.

In some embodiments, geographic cells are non-overlapping stationary regions defined upon the Earth's surface with respect to at least one geographic location on the Earth's surface.

In some embodiments, the method comprises obtaining the current position using a global navigation satellite system, GNSS, unit.

For instance, the current position is obtained repetitively using the GNSS unit.

In some embodiments, the plurality of first identifiers indicating the plurality of first geographic cells includes the current identifier indicating the current geographic cell.

In some embodiments, a geographic location on the Earth's surface is associated with a single geographic cell by the mapping relation between geographic locations and geographic cells.

In some embodiments, the current geographic cell is determined repetitively.

In some embodiments, the method comprises determining whether the current geographic cell is still included in the plurality of first geographic cells; and transmitting an RRC resume request message when the current geographic cell is no longer included in the plurality of first geographic cells.

In some embodiments, the RRC release message includes an indicator indicating that an RRC resume request message should be transmitted upon change of the current geographic cell; and the method comprises transmitting the RRC resume request message when the current geographic cell changes.

In some embodiments, the RRC release message includes an indicator indicating whether or not an RRC resume request message should be transmitted upon change of the current geographic cell, under the situation that the current geographic cell is still included in the plurality of first geographic cells; and the method comprises transmitting the registration request message when the current geographic cell changes, in a case where the indicator indicates that the registration request message should be transmitted upon change of the current geographic cell, under the situation that the current geographic cell is still included in the plurality of first geographic cells.

In some embodiments, the method comprises transmitting the current identifier indicating the current geographic cell or a position indicator indicating the current geographic position.

For instance, the current identifier indicating the current geographic cell or a position indicator indicating the current geographic position is transmitted repetitively.

Further provided is a base station, comprising a transceiver; and circuitry which, in operation, controls the transceiver to serve a transceiver device within a radio cell served by the base station, and determines a plurality of first geographic cells, wherein the transceiver, in operation, transmits, in an RRC release message, a plurality of first identifiers indicating the plurality of first geographic cells.

For example, the plurality of first geographic cells cover a region including a coverage area of the base station.

In some embodiments, the RRC release message includes an indicator indicating that an RRC resume request message should be transmitted by the transceiver device upon change of the current geographic cell.

In some embodiments, the RRC release message includes an indicator indicating whether or not an RRC resume request message should be transmitted by the transceiver device upon change of the current geographic cell, under the situation that the current geographic cell is still included in the plurality of first geographic cells.

In some embodiments , in a paging procedure for paging the transceiver device, the circuitry, in operation, determines one or more second geographic cells from among the plurality of first geographic cells; and the transceiver, in operation, transmits, in a first paging message, one or more second identifiers indicating the one or more second geographic cells.

In some embodiments, the transceiver, in operation, receives the current identifier indicating the current geographic cell of the transceiver device or a position indicator indicating a current position of the transceiver device; and in the paging procedure for paging the transceiver device: the circuitry, in operation, determines one or more second geographic cells from among the plurality of first geographic cells using the current geographic cell or, respectively, the current position of the transceiver device and the mapping relation between geographic locations and geographic cells.

In some embodiments, the transceiver, in operation, repetitively receives the current identifier indicating the current geographic cell of the transceiver device or a position indicator indicating a current position of the transceiver device; and in the paging procedure for paging the transceiver device: the circuitry, in operation, determines one or more second geographic cells from among the plurality of first geographic cells using the current geographic cell or, respectively, the current position of the transceiver device and the mapping relation between geographic locations and geographic cells.

In some embodiments, in the paging procedure for paging the transceiver device: the circuitry, in operation, determines one or more base stations from among a plurality of base stations, using the one or more second geographic cells and a mapping relation between coverage areas of the plurality of base stations and the one or more second geographic cells; and the transceiver, in operation, transmits the first paging message to the determined one or more base stations.

In some embodiments, the transceiver, in operation, serves the radio cell using a plurality of beams; and circuitry which, in operation, determines one or more beams using the one or more second geographic cells and a mapping relation between the one or more second geographic cells and coverage areas of the plurality of beams, and controls the transceiver to transmit a paging message using the determined one or more beams.

In some embodiments, the base station is configured to operate on a satellite.

Further provided is a method, comprising serving a transceiver device within a served radio cell; determining a plurality of first geographic cells; and transmitting, in an RRC release message, a plurality of first identifiers indicating the plurality of first geographic cells.

For example, the plurality of first geographic cells cover a region including a coverage area of the base station.

In some embodiments, the method is performed by a base station.

In some embodiments, the RRC release message includes an indicator indicating that an RRC resume request message should be transmitted by the transceiver device upon change of the current geographic cell.

In some embodiments, the RRC release message includes an indicator indicating whether or not an RRC resume request message should be transmitted by the transceiver device upon change of the current geographic cell, under the situation that the current geographic cell is still included in the plurality of first geographic cells.

In some embodiments , in a paging procedure for paging the transceiver device, the method comprises: determining one or more second geographic cells from among the plurality of first geographic cells; and transmitting, in a first paging message, one or more second identifiers indicating the one or more second geographic cells.

In some embodiments, the method comprises receiving the current identifier indicating the current geographic cell of the transceiver device or a position indicator indicating a current position of the transceiver device; and in the paging procedure for paging the transceiver device: determining one or more second geographic cells from among the plurality of first geographic cells using the current geographic cell or, respectively, the current position of the transceiver device and the mapping relation between geographic locations and geographic cells.

In some embodiments, the method comprises repetitively receiving the current identifier indicating the current geographic cell of the transceiver device or a position indicator indicating a current position of the transceiver device; and in the paging procedure for paging the transceiver device: determining one or more second geographic cells from among the plurality of first geographic cells using the current geographic cell or, respectively, the current position of the transceiver device and the mapping relation between geographic locations and geographic cells.

In some embodiments, the method comprises: in the paging procedure for paging the transceiver device, determining one or more base stations from among a plurality of base stations, using the one or more second geographic cells and a mapping relation between coverage areas of the plurality of base stations and the one or more second geographic cells; and, transmitting the first paging message to the determined one or more base stations

In some embodiments, the method comprises serving a radio cell using a plurality of beams; determining one or more beams using the one or more second geographic cells and a mapping relation between the one or more second geographic cells and coverage areas of the plurality of beams; and transmitting a paging message using the determined one or more beams.

In some embodiments, the base station is configured to operate on a satellite.

Further provided is a network system, comprising the transceiver device according to any one of the above embodiments and the network entity according to any one of the above embodiments.

Further provided is a network system, comprising the transceiver device according to any one of the above embodiments and the base station according to any one of the above embodiments.

Further provided is a network system, comprising the base station according to any one of the above embodiments and the network entity according to any one of the above embodiments.

Further provided is a network system, comprising the transceiver device according to any one of the above embodiments, the base station according to any one of the above embodiments and the network entity according to any one of the above embodiments.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

## Claims

1. A transceiver device, comprising
   circuitry which, in operation, determines a current geographic cell using a current geographic position of the transceiver device and a mapping relation between geographic locations and geographic cells; and
   a transceiver which, in operation,

   transmits, in a registration request message, a current identifier indicating the current geographic cell, and
   receives, in a registration accept message, a plurality of first identifiers indicating a plurality of first geographic cells.

2. The transceiver device according to claim 1, wherein
   geographic cells are non-overlapping stationary regions defined upon the Earth's surface with respect to at least one geographic location on the Earth's surface.

3. The transceiver device according to claim 1 or 2, wherein
   the plurality of first identifiers indicating the plurality of first geographic cells includes the current identifier indicating the current geographic cell.

4. The transceiver device according to any one of claims 1 to 3, wherein
   a geographic location on the Earth's surface is associated with a single geographic cell by the mapping relation between geographic locations and geographic cells.

5. The transceiver device according to any one of claims 1 to 4, wherein
   the circuitry, in operation, determines the current geographic cell repetitively.

6. The transceiver device according to claim 5, wherein
   the circuitry, in operation,

   determines whether the current geographic cell is still included in the plurality of first geographic cells, and
   controls the transceiver to transmit the registration request message when the current geographic cell is no longer included in the plurality of first geographic cells.

7. The transceiver device according to claim 5 or 6, wherein
   the registration accept message includes an indicator indicating that a registration request message should be transmitted by the transceiver device upon change of the current geographic cell; and

the circuitry, in operation, controls the transceiver to transmit the registration request message when the current geographic cell changes.

8. The transceiver device according to any one of claims 5 to 7, wherein
the transceiver, in operation, transmits the current identifier indicating the current geographic cell or a position indicator indicating the current geographic position of the transceiver device.

9. A network entity, comprising
a transceiver which, in operation,

receives, in a registration request message, a current identifier indicating a current geographic cell of a transceiver device, and
transmits, in a registration accept message, a plurality of first identifiers indicating a plurality of first geographic cells; and

circuitry which, in operation, determines the plurality of first geographic cells using at least the current geographic cell of the transceiver device and a mapping relation between geographic locations and geographic cells.

10. The network entity according to claim 9, wherein
the registration accept message includes an indicator indicating that a registration request message should be transmitted by the transceiver device upon change of the current geographic cell.

11. The network entity according to claim 9 or 10, wherein
in a paging procedure for paging the transceiver device

the circuitry, in operation, determines one or more second geographic cells from among the plurality of first geographic cells; and
the transceiver, in operation, transmits, in a first paging message, one or more second identifiers indicating the one or more second geographic cells.

12. The network entity according to claim 11, wherein
the transceiver, in operation, receives the current identifier indicating the current geographic cell of the transceiver device or a position indicator indicating a current position of the transceiver device; and
in the paging procedure for paging the transceiver device
the circuitry, in operation, determines the one or more second geographic cells from among the plurality of first geographic cells using the current geographic cell or, respectively, the current position of the transceiver device and the mapping relation between geographic locations and geographic cells

13. The network entity according to claim 11 or 12, wherein
in the paging procedure for paging the transceiver device

the circuitry, in operation, determines one or more base stations from among a plurality of base stations, using the one or more second geographic cells and a mapping relation between coverage areas of the plurality of base stations and the one or more second geographic cells; and
the transceiver, in operation, transmits the first paging message to the determined one or more base stations.

14. A base station, comprising
a transceiver which, in operation,

serves a radio cell using a plurality of beams, and
receives a first paging message including one or more second identifiers indicating one or more second geographic cells; and

circuitry which, in operation,

determines one or more beams using the one or more second geographic cells and a mapping relation between the one or more second geographic cells and coverage areas of the plurality of beams, and
controls the transceiver to transmit a second paging message using the determined one or more beams.

**15.** The base station according to claim 14, wherein
the base station is configured to operate on a satellite.

**Fig. 1**

**Fig. 2**

**Fig. 3**

**Fig. 4**

## Usage scenarios of IMT for 2020 and beyond

### Enhanced mobility broadband

Gigabytes in a second

3D video, UHD screens

Work and play in the cloud

Smart home/building

Augmented reality

Voice

Industry automation

Smart city

Mission critical application

Self driving car

Future IMT

Massive machine type communications

Ultra-reliable and low latency communications

**Fig. 5**

| NSSF | NEF | NRF | PCF | UDM | AF |

Nnssf  Nnef  Nnrf  Npcf  Nudm  Naf

Nausf  Namf  Nsmf

AUSF  AMF  SMF

N1  N2  N4

UE  (R)AN  N3  UPF  N6  DN

N9

**Fig. 6**

At t

Country A (TA1)  Country B (TA2)

| C1 | C5 | C9 |

| C2 | C6 | C10 |

| C3 | C7 | C11 |

| C4 | C8 | C12 |

← Cells' moving direction

**Fig. 7A**

At t+Δt

Country A (TA1)  Country B (TA2)

| C1 | C5 | C9 |

| C2 | C6 | C10 |

| C3 | C7 | C11 |

| C4 | C8 | C12 |

← Cells' moving direction

**Fig. 7B**

**Fig. 8A**

**Fig. 8B**

**Fig. 8C**

**Fig. 9**

start

S10

Determine a current geographic cell using a current geographic position and a mapping relation

S11

Transmit, in a registration request message, a current identifier indicating the current geographic cell

S12

Receive, in a registration accept message, a plurality of first identifiers indicating a plurality of first geographic cells

**Fig. 10**

start

S20

Receive, in a registration request message, a current identifier indicating a current geographic cell of a transceiver device

S21

Determine a plurality of first geographic cells

S22

Transmit, in a registration accept message, a plurality of first identifiers indicating the plurality of first geographic cells

**Fig. 11**

**Fig. 12**

**Fig. 13**

```
                            ┌──────────┐
                            │  start   │
                            └──────────┘
                                 │
                                 ▼
 S30
┌──────────────────────────────────────────────────────────────┐
│           Serve a radio cell using a plurality of beams        │
└──────────────────────────────────────────────────────────────┘
                                 │
                                 ▼
 S31
┌──────────────────────────────────────────────────────────────┐
│  Receive a first paging message including one or more second   │
│  identifiers indicating one or more second geographic cells    │
└──────────────────────────────────────────────────────────────┘
                                 │
                                 ▼
 S32
┌──────────────────────────────────────────────────────────────┐
│  Determine one or more beams using the one or more second      │
│  geographic cells and a mapping relation between the one or     │
│  more second geographic cells and coverage areas of the         │
│  plurality of beams                                             │
└──────────────────────────────────────────────────────────────┘
                                 │
                                 ▼
 S33
┌──────────────────────────────────────────────────────────────┐
│  Transmit a second paging message using the determined one or  │
│  more beams                                                     │
└──────────────────────────────────────────────────────────────┘
```

**Fig. 14**

start

S100

UE is in CM_CONNECTED and is provided with the geographic cell definition

S110

UE determines its current geographic cell using its current GNSS position

S120

UE sends Registration Request containing a current identifier indicating the current geographic cell to AMF

S130

UE receives Registration Accept containing a list of first identifiers indicating a plurality of first geographic cells from AMF

S140

Is UE in CM_IDLE ?

yes

no

S160

UE monitors the paging message from AMF

S150

Has UE left the area spanned by the plurality of first geographic cells ?

yes

no

S170

Is UE being paged by AMF ?

no

yes

S180

Has UE left the area spanned by the plurality of first geographic cells ?

no

yes

S190

UE sends Service Request to AMF and receives DL data from network

Fig. 15

start

S200

AMF is provided with the geographic cell definition and gNBs' movement, position and/or coverage infromation

S210

AMF receives Registration Request from a UE containing a current identifier indicating the current geographic cell of the UE

S220

AMF determines UE's registered TA (i.e. a list of first identifiers) using at least the current geographic cell provided in the Registration Request

S230

AMF sends Registration Accept containing the list of list of first identifiers

S240

AMF instructs the UE to enter CM_IDLE ?

yes                                                                  no

S260

Any DL data for the UE ?

no                          yes                                    S250

S270                                                               Receives Registration
                                                                   Request from the UE ?        yes

Receives Registration
Request from the UE ?
no

S280                                                               no

AMF sends the PAGING
Message to the gNBs that are
currently mapped to the
tracking area assigned to the
UE. The PAGING Message
contains the list of identifiers

yes

S290

AMF receives the Service
Request from the UE and
responses with the Service
Accept

**Fig. 16**

start

S300

gNB is provided with the geographic cell definition

no    S310

gNB receives PAGING message from AMF ?

yes

S320

gNB selects the physical cells/beams that are currently covering the geographic cells listed in the PAGING message

S330

gNB pages the UE using the selected physical cells/beams

**Fig. 17**

Europäisches
Patentamt

European
Patent Office

Office européen
des brevets

# EUROPEAN SEARCH REPORT

Application Number

EP 20 18 9893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZTE CORPORATION ET AL: "Tracking area management in NTN", 3GPP DRAFT; R2-1903622_TRACKING AREA MANAGEMENT IN NTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Xi'an, China; 20190408 - 20190412 6 April 2019 (2019-04-06), XP051700964, Retrieved from the Internet: URL:http://www.3gpp.org/ftp/Meetings%5F3GP P%5FSYNC/RAN2/Docs/R2%2D1903622%2Ezip [retrieved on 2019-04-06] | 1-6,8,9, 11-13 | INV. H04W8/06 H04W8/08 H04W60/04 |
| Y | * the whole document * ----- | 7,10 | |
| A | EP 2 355 600 A1 (PANTECH CO LTD [KR]) 10 August 2011 (2011-08-10) * abstract * * paragraphs [0033] - [0042] * ----- | 1-13 | |
| | -/-- | | TECHNICAL FIELDS SEARCHED (IPC) H04W |

~~The present search report has been drawn up for all claims~~

| Place of search | Date of completion of the search | Examiner |
|---|---|---|
| Munich | 18 December 2020 | Delucchi, Cecilia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 18 9893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LG ELECTRONICS ET AL: "Solution 8 update "Cell based paging area update for efficient paging area management"", 3GPP DRAFT; S2-153970 CIOT SOLUTION8 UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Anaheim, USA; 20151116 - 20151120 16 November 2015 (2015-11-16), XP051014052, Retrieved from the Internet: URL:http://www.3gpp.org/ftp/Meetings_3GPP_ SYNC/SA2/Docs/ [retrieved on 2015-11-16] | 7,10 | |
| A | * the whole document * | 1-6,8,9, 11-13 | |
| | ----- | | |
| A | US 2019/253993 A1 (RAMLE PETER [SE] ET AL) 15 August 2019 (2019-08-15) * abstract * * paragraphs [0162] - [0208]; figure 8 * ----- | 1-13 | TECHNICAL FIELDS SEARCHED (IPC) |

~~The present search report has been drawn up for all claims~~

| Place of search | Date of completion of the search | Examiner |
|---|---|---|
| Munich | 18 December 2020 | Delucchi, Cecilia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12(completely); 13(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 20 18 9893

The Search Division considers that the present European patent application does not comply with the
requirements of unity of invention and relates to several inventions or groups of inventions, namely:

1. claims: 1-12(completely); 13(partially)

Transceiver device and network entity interacting in a
registration procedure comprising transmitting/receiving
registration messages comprising identifiers of geographic
cells determined using a current cell and a mapping relation
between geographic locations and cells.
- - -

2. claims: 14, 15(completely); 13(partially)

Network entity NE and base station BS interacting in a
paging procedure comprising the receiving/transmitting of
paging messages involving determining by the NE one or more
BS and by the BS one or more beams using geographic cells
and a mapping relation.
- - -

## ANNEX TO THE EUROPEAN SEARCH REPORT
## ON EUROPEAN PATENT APPLICATION NO.

EP 20 18 9893

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2020

| Patent document cited in search report | | Publication date | Patent family member(s) | | Publication date |
|---|---|---|---|---|---|
| EP 2355600 | A1 | 10-08-2011 | CN | 102143480 A | 03-08-2011 |
| | | | EP | 2355600 A1 | 10-08-2011 |
| | | | JP | 2011160415 A | 18-08-2011 |
| | | | KR | 20110088673 A | 04-08-2011 |
| | | | US | 2011190010 A1 | 04-08-2011 |
| US 2019253993 | A1 | 15-08-2019 | EP | 3536070 A1 | 11-09-2019 |
| | | | US | 2019253993 A1 | 15-08-2019 |
| | | | WO | 2018084789 A1 | 11-05-2018 |

EPO FORM P0459

For more details about this annex : see Official Journal of the European Patent Office, No. 12/82